(19) Europäisches Patentamt

European Patent Office

Office européen des brevets

(11) **EP 3 039 177 B1**

(12) **EUROPEAN PATENT SPECIFICATION**

(45) Date of publication and mention of the grant of the patent:
**06.10.2021 Bulletin 2021/40**

(21) Application number: **14840191.2**

(22) Date of filing: **22.08.2014**

(51) Int Cl.:
**D04H 1/00** *(2006.01)*    **B01D 39/16** *(2006.01)*

(86) International application number:
**PCT/US2014/052236**

(87) International publication number:
**WO 2015/031181 (05.03.2015 Gazette 2015/09)**

(54) **FILTER MEDIA HAVING AN OPTIMIZED GRADIENT**

FILTERMEDIEN MIT OPTIMIERTEM GRADIENTEN

SUPPORT FILTRANT PRÉSENTANT UN GRADIENT OPTIMISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2013 US 201314010125**

(43) Date of publication of application:
**06.07.2016 Bulletin 2016/27**

(73) Proprietor: **Hollingsworth & Vose Company East Walpole, MA 02032 (US)**

(72) Inventors:
• **SILIN, Maxim**
**Hudson, MA 01749 (US)**

• **JAGANATHAN, Sudhakar**
**Waltham, MA 02452 (US)**

(74) Representative: **Hoffmann Eitle**
**Patent- und Rechtsanwälte PartmbB**
**Arabellastraße 30**
**81925 München (DE)**

(56) References cited:
**WO-A1-2008/103736      US-A- 4 731 135**
**US-A1- 2006 096 263      US-A1- 2013 025 809**
**US-A1- 2013 116 645**

• **None**

**Description**

**FIELD OF INVENTION**

The present embodiments relate generally to filter media, and more specifically, to filter media having a gradient in a property.

**BACKGROUND**

Filter elements can be used to remove contamination in a variety of applications. Such elements can include a filter media which may be formed of a web of fibers. The filter media provides a porous structure that permits fluid (e.g., gas, liquid) to flow through the media. Contaminant particles (e.g., dust particles, soot particles) contained within the fluid may be trapped on or in the filter media. Depending on the application, the filter media may be designed to have different performance characteristics.

In some applications, filter media may have a gradient in a property. This gradient can be optimized to lead to improvements in the performance characteristics of the filter media.

WO 2008/103736 A1 discloses a filter element having multiple formed layers of filtration media. The media are layered as to form a pore size gradient.

US 2006/0096263 A1 refers to thermoplastic biocomponent binder fibers, which can be combined with other media, fibers or other filtration components, to form a thermally bonded filtration media.

**SUMMARY OF THE INVENTION**

Filter media having a gradient in a property, and related components, systems, and methods associated therewith are provided.

In one set of embodiments, a series of filter media are provided. According to claim 1, a filter media has a gradient in mean pore size across at least a portion of the thickness of the filter media. The gradient is represented by an exponential function fit to four numerical values of the mean pore size determined at different points across at least the portion of the thickness of the filter media. The exponential function has the form:

$$\text{mean pore size(x)} = a * \exp(k * x)$$

wherein x corresponds to a location along the thickness of the portion of the filter media and is normalized to have a value greater than or equal to 0 and less than or equal to 1, and k is greater than or equal to 0.1 and less than or equal to 1.75 and a is greater than or equal to 0.1 $\mu$m and less than or equal to 100 $\mu$m. The exponential function is determined using a least squares linear regression model and the coefficient of determination of the exponential function is greater than or equal to 0.9.

According to the disclosure, a filter media has a gradient in mean pore size across at least a portion of the thickness of the filter media. The gradient is represented by an exponential function fit to at least four numerical values of the mean pore size determined at different points across at least the portion of the thickness of the filter media. The exponential function has the form:

$$\text{mean pore size(x)} = a * \exp(k * x)$$

wherein x corresponds to a location along the thickness of the portion of the filter media and is normalized to have a value greater than or equal to 0 and less than or equal to 1, and k is greater than or equal to 0.1 and less than or equal to 1.75. The exponential function is determined using a least squares linear regression model. The coefficient of determination of the exponential function is greater than or equal to about 0.7 and the coefficient of determination of the exponential function is greater than all coefficient of determinations for linear functions fit to the at least four numerical values of the mean pore size using the least squares linear regression model.

In another set of embodiments, a method is provided. According to claim 2, a method comprises providing a filter media having a gradient in mean pore size across at least a portion of the thickness of the filter media, wherein the gradient is represented by an exponential function fit to four numerical values of the mean pore size determined at different points across at least the portion of the thickness of the filter media. The exponential function has the form:

$$\text{mean pore size(x)} = a*\exp(k*x)$$

wherein x corresponds to a location along the thickness of the portion of the filter media and is normalized to have a value greater than or equal to 0 and less than or equal to 1, k is greater than or equal to 0.1 and less than or equal to 1.75 and a is greater than or equal to 0.1 $\mu$m and less than or equal to 100 $\mu$m. The exponential function is determined using a least squares linear regression model, and the coefficient of determination of the exponential function is greater than or equal to 0.9. The method comprises filtering a liquid using the filter media.

Other advantages and novel features of the present invention will become apparent from the following detailed description of various non-limiting embodiments of the invention when considered in conjunction with the accompanying figures.

**BRIEF DESCRIPTION OF THE DRAWINGS**

Non-limiting embodiments of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention. In the figures:

FIGs. 1A-B are (A) a schematic plot of mean pore size versus thickness and (B) a schematic of a filter media having a gradient in a property across a portion of the filter media, according to one set of embodiments;
FIGs. 2A-B are (A) a plot of various gradients in mean pore size and (B) a plot of pressure drop versus loading time for various gradients in mean pore size according to certain embodiments;
FIGs. 3A-C are (A) a plot of various gradients in mean pore size, (B) a plot of pressure drop versus loading time for various gradients in mean pore size, and (C) a plot of average beta 200 rating versus particle size for various gradients in mean pore size according to one set of embodiments; and
FIGs. 4A-B are (A) a plot of exponential gradients in mean pore size with various k values and (B) a plot of various filtration properties versus k values according to certain embodiments.

**DETAILED DESCRIPTION**

Filter media having a gradient in a property and methods associated with such media are provided. The filter media includes pores through which fluid passes through the media. In some embodiments, the mean pore size changes across at least a portion of the filter media to produce a gradient in mean pore size. For example, the gradient in mean pore size may be across at least a portion of the thickness of the filter media. As described further below, the gradient can be represented by a convex function (e.g., exponential function). Such a gradient may impart desirable properties to the filter media including enhanced filtration properties (e.g., relatively high dust holding capacity and efficiency, long lifetime), amongst other benefits. The filter media may be particularly well-suited for applications that involve filtering liquids (e.g., hydraulics, fuel, lube, water), though the media may also be used in other applications (e.g., air).

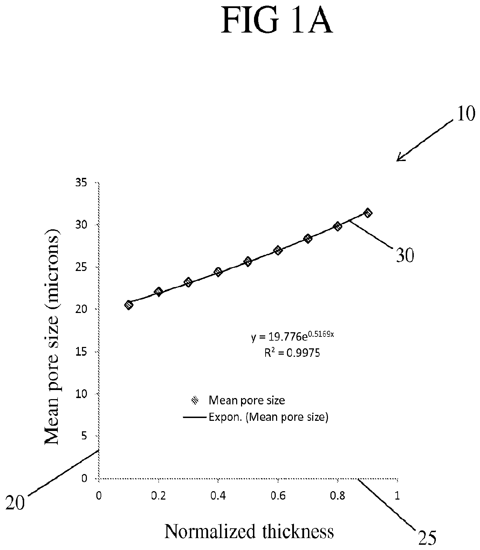

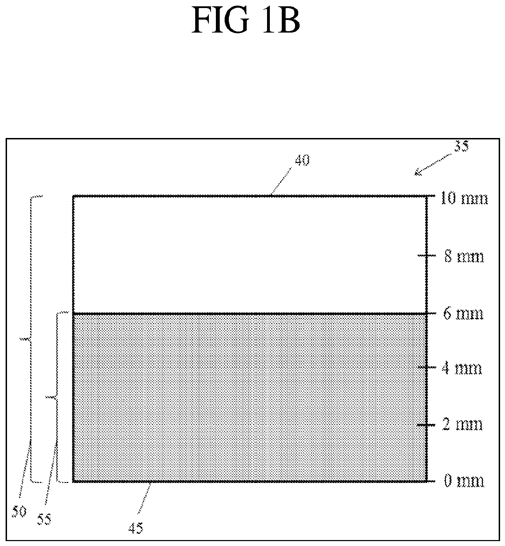

In some embodiments, a relationship may exist between mean pore size and the thickness of the filter media, such that the gradient in mean pore size may be represented by a mathematical function. A non-limiting example is shown in FIG. 1A. FIG. 1A illustrates a plot of mean pore size at various locations along the gradient in mean pore size. The y-axis of the plot is mean pore size and the x-axis is the normalized thickness of the filter media, such that zero corresponds to the most downstream location of the gradient and one corresponds to the most upstream location of the gradient. In some embodiments, regression analysis may be used to generate a regression function 30 that adequately represents the mean pore size values at different thicknesses. For example, a regression analysis of different values of mean pore size determined at different thicknesses along the gradient may produce a function with a strong goodness of fit as illustrated in FIG. 1.

In some embodiments, the gradient in mean pore size may be best represented by a convex function, such that a measure of the goodness of fit for the convex function is stronger than the goodness of fit for other functions. The convex function that best represents the gradient in mean pore size may be an exponential function. In some embodiments, the exponential function may have the form:

$$\text{mean pore size (x)} = a*\exp(k*x), \qquad\qquad (1)$$

wherein $x$ is the normalized thickness of the filter media at a certain mean pore size, $a$ is a constant with micron units, and k is a constant. The exponential function may be determined by using a least squares linear regression model to fit four or more (e.g., at least 6, at least 8, at least 10, at least 12, at least 15, at least 20) numerical values of the mean pore size.

In some embodiments, four numerical values are used. The numerical values of mean pore size may be determined at different arbitrary points across at least a portion of the thickness of the gradient. For instance, as illustrated in FIG. 1B, a filter media 35 having an upstream 40 and a downstream 45 may have a thickness (t) of 10 mm. The filter media may have a gradient in mean pore size from a depth of 0 mm to a depth of 6 mm. Numerical values of mean pore size may be determined at points within the gradient such that each point corresponds to a different depth. In some embodiments, the portion of the gradient spanned by the points (i.e., selected thickness portion) is across greater than or equal to about 20% (e.g., greater than or equal to about 30%, greater than or equal to about 40%, greater than or equal to about 50%, greater than or equal to about 60%, greater than or equal to about 70%, greater than or equal to about 80%) of the thickness of the gradient portion of the filter media. In some instances, the numerical values of mean pore size may be determined within different layers of a gradient portion comprising two or more layers. For example, each numerical value of mean pore size may be determined such that each point corresponds to a different layer of a gradient portion having four or more layers. The mean pore size at different depths within the filter media correspond to points defined by mean pore size and thickness that can be plotted on a graph of mean pore size versus thickness as illustrated in FIG. 1A.

As used herein, a normalized thickness x refers to a dimensionless thickness that corresponds to a location along the thickness of the gradient. A normalized thickness value is calculated based on the thickness of the selected portion of the gradient. For instance, referring to FIG. 1B, a portion (e.g., from a depth of 0 mm to a depth of 6 mm, from a depth of 1 mm to a depth of 4 mm, from a depth of 3 mm to a depth of 5 mm, etc.) of the gradient portion 55 may be selected for regression analysis. The normalized thickness value for a given depth may be calculated by subtracting the most downstream depth of the selected thickness portion from the given depth and dividing by the thickness of the selected thickness portion of the gradient portion minus the most downstream depth of the selected portion. For example, a selected thickness portion of a gradient portion may range from 2 mm to 6 mm. The thickness of the selected portion is 4 mm. In such cases, the normalized thickness for a mean pore size determined at a depth of 4 mm is 0.5 (i.e., normalized thickness = (4-2)/(6-2)= 0.5). In general, the most downstream location of the selected portion of the gradient portion is 0 and the most upstream location of the selected portion of the gradient portion is 1.

The constant $a$ is related to the mean pore size of a downstream location of the selected portion of the gradient (e.g., $x = 0$). The value of a is greater than or equal to 0.1 $\mu$m and less than or equal to 100 $\mu$m. It may be greater than or equal to about 0.2 $\mu$m, greater than or equal to about 0.5 $\mu$m, greater than or equal to about 1 $\mu$m, greater than or equal to about 5 $\mu$m, greater than or equal to about 10 $\mu$m, greater than or equal to about 20 $\mu$m, greater than or equal to about 30 $\mu$m, greater than or equal to about 40 $\mu$m, greater than or equal to about 50 $\mu$m, greater than or equal to about 60 $\mu$m, or greater than or equal to about 75 $\mu$m. In some instances, the value of $a$ may be less than or equal to about 80 $\mu$m, less than or equal to about 60 $\mu$m, less than or equal to about 50 $\mu$m, less than or equal to about 40 $\mu$m, less than or equal to about 30 $\mu$m, less than or equal to about 20 $\mu$m, less than or equal to about 10 $\mu$m, or less than or equal to about 5 $\mu$m. All combinations of the above-referenced ranges are possible (e.g., greater than or equal to about 0.2 $\mu$m and less than or equal to about 60 $\mu$m). In some embodiments, the constant k may be related to certain filtration properties of the filter media. For example, k may relate to the air resistance of the selected portion of the gradient due, in part, to the relationship between air resistance and mean pore size. In certain embodiments, exponential gradients in mean pore size with certain values of k may have enhanced filtration properties (e.g., dust holding capacity) compared to exponential gradients in mean pore size with other values of $k$. Enhanced filtration properties are achieved for values of $k$ greater than or equal to 0.1 and less than or equal to 1.75. Enhanced filtration properties may be achieved for values of k, greater than or equal to about 0.25, greater than or equal to about 0.35, greater than or equal to about 0.45, greater than or equal to about 0.55, greater than or equal to about 0.65, greater than or equal to about 0.8, greater than or equal to about 1.0, greater than or equal to about 1.25, or greater than or equal to about 1.5. In some instances, enhanced filtration properties may be achieved for values of $k$ less than or equal to about 1.5, less than or equal to about 1.25, less than or equal to about 1, less than or equal to about 0.75, less than or equal to about 0.65, less than or equal to about 0.55, less than or equal to about 0.45, less than or equal to about 0.35, or less than or equal to about 0.1. All combinations of the above-referenced ranges are possible (e.g., greater than or equal to about 0.1 and less than or equal to about 1.5, greater than or equal to about 0.25 and less than or equal to about 0.75).

As described herein, the gradient in mean pore size may be represented by a convex function (e.g., exponential function) that has a strong goodness of fit for the distribution in mean pore size with respect to thickness. For example, a regression model (e.g., non-linear, linear least squares) may be used to fit a distribution of mean pore size with respect to thickness in the portion of the filter media having the gradient. The goodness of fit for the convex function (e.g., exponential function) may be relatively strong and/or may be greater than another function (e.g., linear function, concave function) generated using the same regression model. In embodiments in which a linear least squares regression model is used, the goodness of fit may be determined by the coefficient of determination ($R^2$) that ranges from zero (i.e., no fit) to one (i.e., perfect fit). In some such embodiments, $R^2$ for the exponential function fit to four or more numerical values of the mean pore size determined at different points across at least a portion of the thickness of the gradient in mean pore size may be greater than or equal to about 0.7, greater than or equal to about 0.75, greater than or equal to about 0.8, greater than or equal to about 0.85, greater than or equal to about 0.9, greater than or equal to about 0.95, greater than or equal to about 0.97, greater than or equal to about 0.98, or greater than or equal to about 0.99. For instance, in some embodiments, $R^2$ for the exponential function fit to four values may be greater than or equal to about 0.9. In some instances, $R^2$ for the exponential function fit to six values may be greater than or equal to about 0.85. In certain embodiments, $R^2$ for the exponential function fit to ten values may be greater than or equal to about 0.8. In other embodiments, $R^2$ for the exponential function fit to 15 or more values may be greater than or equal to about 0.75. The linear least squares regression models may be applied to a function by utilizing linearization methods known to those of ordinary skill in the art.

In certain embodiments, the coefficient of determination ($R^2$) for the convex function (e.g., exponential function) may be greater than other functions generated using the least squares linear regression model. For example, the convex function (e.g., exponential function) may have the greatest coefficient of determination ($R^2$) and may be referred to as the best fit function for the distribution. In some embodiments, the coefficient of determination of the convex function (e.g., exponential function) is greater than all coefficient of determinations for one or more class of functions (e.g., linear, quadratic) fit to the four or more numerical values of the mean pore size using the least squares linear regression model. For instance, the coefficient of determination of the convex function (e.g., exponential function) may be greater than all coefficient of determinations for linear, quadratic, concave, sigmoidal, and/or periodic functions fit to the four or more numerical values of the mean pore size using the least squares linear regression model.

It should be understood that though filter media having a gradient in a property has been described in terms of a gradient in mean pore size, filter media may have a gradient in another property (e.g., fiber furnish, solidity) instead of, or in addition to, a gradient in mean pore size. For instance, in some embodiments, a filter media having an exponential gradient in mean pore across at least a portion of the thickness of the filter media may have a gradient in fiber furnish (i.e., the percentage of a fiber type varies) and/or a gradient in solidity. In certain embodiments, the filter media may have a gradient, as described herein, in a fiber characteristic (e.g., mean fiber diameter, fiber type, mean fiber length, level of fibrillation) instead of, or in addition to, a gradient in mean pore size. In some instances, filter media may have a convex gradient (e.g., exponential gradient) in solidity across at least a portion of the thickness of the filter media, such that the highest numerical value of solidity occurs at the most downstream point of the gradient and the lowest solidity occurs at the most upstream point of the gradient. In certain cases, the filter media may have convex gradient (e.g., exponential gradient) in mean fiber diameter across at least a portion of the thickness of the filter media. In general, filter media may have a gradient in any property or combinations of properties that are capable of achieving the desired filtration and/or mechanical properties.

As described herein, a filter media may have a gradient in mean pore size across at least a portion of the thickness of the filter media. In some embodiments, the gradient in mean pore size may be across the entire filter media. In some such embodiments, the filter media may be a single layer or have multiple layers that form the gradient. In other embodiments, the gradient in mean pore size may be across a portion of the filter media. In some such cases, the portion of the filter media having the gradient in mean pore size may be a portion of a single layer, or at least one layer of, a multi-layered filter media. In some instances, the portion of the filter media having the gradient in mean pore size may be across one or more layers of a multi-layered filter media. For instance, the gradient may be across the thickness of 1, 2, 3, 4, 5, 6, etc. layers of a multi-layered filter media. In some such embodiments, each layer of a multi-layered gradient may have a different mean pore size, such that a convex function (e.g., exponential function) fit to four or more numerical values of mean pore size determined at different layers of the multi-layered gradient has a strong goodness of fit, as described herein. In certain embodiments, at least one layer of a multi-layered gradient may have a constant mean pore size, i.e., the mean pore size does not change across the thickness of the layer. For example, a multi-layered gradient may comprise four layers (e.g., laminated together) that each has a constant mean pore size across the thickness of the layer and each has a different mean pore size than the other layers.

In some embodiments, a single or multiple layer gradient may be formed by a variance in one or more characteristics of the layer(s). In certain embodiments, a fiber characteristic and/or structural property may be varied across a single layer or multiple layers to form a gradient in mean pore size. For example, the weight percentage of two or more fibers having different fiber diameters may be varied across a single layer or multiple layers to form a gradient. Non-limiting examples of fiber characteristics that may be varied include the mean fiber diameter, the ratio of fiber types, the weight percentage of a certain fiber, the volume of fibers, the mean fiber length, and the level of fibrillation. In certain embodiments, a structural property, such as density, may be varied across multiple layers to form a gradient. In some embodiments, a gradient in mean pore size is not formed by completely or partially filling the pores using a resin. In some such cases, the concentration of resin throughout the thickness of the gradient portion is relatively constant and/or the mean pore size of the gradient portion would vary, as described herein, in the absence of resin. In some embodiments, the layer(s) that do not include a gradient in mean pore size (i.e., non-gradient layer) in the multi-layered filter media may impart structural and mechanical support to the overall filter media and may contribute to the overall structural characteristics (e.g, basis weight, thickness, solidity, etc) of the filter media. For example, such layer(s) in the multi-layered filter media may be a fibrous support layer or a non-fibrous support layer (e.g., a layer formed of a wire or mesh) included to provide additional support for the filter media. In some such cases, the one or more non-gradient layers may not substantially alter the filtration properties of the filter media.

In certain embodiments, one or more non-gradient layer(s) in the multi-layered filter media may contribute to the overall filtration properties of the filter media. For instance, one or more non-gradient layer(s) may be an efficiency layer having a relatively small mean pore size that is included in the filter media to improve the overall efficiency. In some such cases, one or more efficiency layer may be positioned downstream and/or upstream of the gradient layer(s). In another example, the one or more non-gradient layer may be a pre-filter layer having a relatively large mean pore size that is included in the filter media to remove relatively large contaminants in a fluid upstream of the gradient layer(s). In certain cases, such as for certain hydraulic applications, the gradient may serve as a pre-filter for a downstream efficiency layer having a relatively small mean pore size, low pressure drop, and/or high efficiency. In some such embodiments, the gradient may be adjacent to the efficiency layer. In general, the one or more non-gradient layer(s) may be selected as desired for a given application.

As used herein, when a layer is referred to as being "adjacent" another layer, it can be directly adjacent the layer, or an intervening layer also may be present. A layer that is "directly adjacent" or "in contact with" another layer means that no intervening layer is present.

In some instances, a multi-layered filter media may comprise a non-gradient efficiency layer and a non-gradient pre-filter. In general, a multi-layered filter media having one or more gradient layer(s) may include any suitable type or number of non-gradient layers.

In some embodiments, the gradient across a portion, or all, of the thickness of the filter media may have the below-noted mean pore size, solidity, basis weight, thickness, dust holding capacity, beta 200, beta 1000, and/or air permeability values described herein for the entire filter media.

In general, the structural characteristics (e.g., mean pore size, thickness, solidity, basis weight) of filter media having a gradient in mean pore size may be selected as desired for a given application (e.g., hydraulics, fuel, lube, water). In some embodiments, the magnitude of the change in mean pore size across the filter media (i.e., mean pore size at the most upstream location minus the most downstream location of the gradient) may be greater than or equal to about 0.1 $\mu$m, greater than or equal to about 0.2 $\mu$m, greater than or equal to about 0.5 $\mu$m, greater than or equal to about 1 $\mu$m, greater than or equal to about 5 $\mu$m, greater than or equal to about 10 $\mu$m, greater than or equal to about 20 $\mu$m, greater than or equal to about 30 $\mu$m, greater than or equal to about 40 $\mu$m, or greater than or equal to about 50 $\mu$m. In some instances, the magnitude of the change in mean pore size across the filter media is less than or equal to about 60 $\mu$m, less than or equal to about 50 $\mu$m, less than or equal to about 40 $\mu$m, less than or equal to about 30 $\mu$m, less than or equal to about 20 $\mu$m, less than or equal to about 10 $\mu$m, less than or equal to about 5 $\mu$m, or less than or equal to about 1 $\mu$m. All combinations of the above-referenced ranges are possible. For example, in some applications, the magnitude of the change in mean pore size across the filter media may be greater than or equal to about 1 $\mu$m and less than or equal to about 60 $\mu$m, greater than or equal to about 2 $\mu$m and less than or equal to about 30 $\mu$m, greater than or equal to about 3 $\mu$m and less than or equal to about 60 $\mu$m, or greater than or equal to about 0.1 $\mu$m and less than or equal to about 5 $\mu$m. Other values of the average magnitude of change of the filter media in mean pore size are possible. The mean pore size may be determined using X-ray computed tomography, as described in more detail below.

In some embodiments, the overall mean pore size of the entire filter media may be selected as desired for a given application (e.g., hydraulics, fuel, lube, water). For instance, in some embodiments, the mean pore size for the gradient portion of the filter media may be greater than or equal to about 0.05 $\mu$m, greater than or equal to about 0.1 $\mu$m, greater than or equal to about 0.2 $\mu$m, greater than or equal to about 1 $\mu$m, greater than equal to about 2 $\mu$m, greater than or equal to about 3 $\mu$m, greater than or equal to about 5 $\mu$m, greater than or equal to about 10 $\mu$m, greater than or equal to about 25 $\mu$m, greater than or equal to about 50 $\mu$m, greater than or equal to about 75 $\mu$m, greater than or equal to about 100 $\mu$m, greater than or equal to about 125 $\mu$m, or greater than or equal to about 150 $\mu$m. In some instances, the overall mean pore size for the entire gradient portion of the filter media may be less than or equal to about 200 $\mu$m, less than or equal to about 175, less than or equal to about 150 $\mu$m, less than or equal to about 125 $\mu$m, less than or equal to about 100 $\mu$m, less than or equal to about 80 $\mu$m, less than or equal to about 60 $\mu$m, less than or equal to about 40 $\mu$m, less than or equal to about 30 $\mu$m, less than or equal to about 20 $\mu$m, less than or equal to about 10 $\mu$m, or less than or equal to about 5 $\mu$m. All combinations of the above-reference ranges are possible. For example, in some applications (e.g., hydraulics, fuel, lube, water), the mean pore size of the gradient portion of the filter media may be greater than or equal to about 0.5 $\mu$m and less than or equal to about 100 $\mu$m, greater than or equal to about 1 $\mu$m and less than or equal to about 60 $\mu$m, greater than or equal to about 1 $\mu$m and less than or equal to about 40 $\mu$m, greater than or equal to about 2 $\mu$m and less than or equal to about 30 $\mu$m, greater than or equal to about 1 $\mu$m and less than or equal to about 100 $\mu$m, greater than or equal to about 3 $\mu$m and less than or equal to about 60 $\mu$m, greater than or equal to about 0.05 $\mu$m and less than or equal to about 10 $\mu$m, or greater than or equal to about 0.1 $\mu$m and

less than or equal to about 5 μm. The overall mean pore size may be determined using X-ray computed tomography for the entire gradient portion or ASTM F-316-80 Method B, BS6410 for the entire filter media having a gradient, as described in more detail below.

In general, the mean pore size of a specific location within the filter media, a portion of the filter media, or the overall filter media may be determined using any technique known to those of ordinary skill in the art to produce accurate measurements of mean pore size. In some embodiments, mean pore size of the entire filter media may be determined according to ASTM F-316-80 Method B, BS6410. For instance, ASTM F-316-80 Method B, BS6410 may be used to determine the mean pore size for the entire filter media.

In some embodiments, the mean pore size of the gradient portion may be measured using X-ray computed tomography (e.g., SkyScan 2011 X-ray nanotomograph scanner manufactured by BRUKER-MICROCT, Kartuizersweg 3B, 2550 Kontich, Belgium). In general, X-ray computed tomography is used to produce a 3D computational representation of the filter media. Computational methods are used to distinguish void spaces (i.e. pores) from solid regions (i.e., fibers) of the filter. Additional computational methods may then be used to determine the average diameter of the void spaces (i.e., mean pore size) of the 3D computational representation of the filter media. In some instances, the computational method establishes a cut-off value (i.e., threshold value) for distinguishing voids from solid regions to generate the 3D computational representation of the filter media. In such cases, the accuracy of the cut-off value may be confirmed by comparing the computationally determined air permeability of the 3D computational representation of the filter media to the experimentally determined air permeability of the actual filter media. In embodiments in which the computationally and experimentally determined air permeabilities are substantially different, the threshold value may be changed by the user until the air permeabilities are substantially the same.

For instance, in embodiments in which the diameter of the discrete pores changes across at least a portion of the thickness of the filter media, an X-ray computed tomography ("CT") machine may scan the filter media and take a plurality of X-ray radiographs at various projection angles through the filter media. Each X-ray radiograph may depict a slice along a plane of the filter media and is converted into a grayscale image of the slice by computational methods known to those of skill in the art (e.g., SkyScan CT-Analyzer software suite manufactured by BRUKER-MICROCT, Kartuizersweg 3B, 2550 Kontich, Belgium). Each slice has a defined thickness such that the grayscale image of the slice is composed of voxels (volume elements), not pixels (picture elements). The plurality of slices generated from the X-ray radiographs may be used to produce a 3D volume rendering of the entire filter media thickness with cross-sectional dimensions of at least 100 x 100 μm using computational methods as noted above. The resolution (voxel size) of the image may be less than or equal to 0.3 microns.

In some embodiments, the 3D volume rendering of the entire filter media thickness along with experimental measurements of the permeability of the filter media may be used to determine the mean pore size. Each individual grayscale image generated from the X-ray radiographs typically consists of light intensity data scaled in an 8-bit range (i.e., 0-255 possible values). To form the 3D volume rendering of the entire filter media thickness, the 8-bit grayscale images are converted into binary images.

The conversion of the 8-bit grayscale images to binary images requires the selection of an appropriate intensity threshold cut-off value to distinguish solid regions of the filter media from pore spaces in the filter media. The intensity threshold cut-off value is applied to the 8-bit grayscale image and is used to correctly segment solid and pore spaces in the binary image. The binary images are then used to create a virtual media domain, i.e., 3D rectangular array of filled (fiber) voxels and void (pore) voxels that accurately identifies solid regions and pore spaces. Various thresholding algorithms are reviewed in: Jain, A. (1989), Fundamentals of digital image processing, Englewood Cliffs,NJ: Prentice Hall. and Russ. (2002), The image processing handbook, 4th ed. Boca Raton, Fla: CRC Press.

The intensity threshold cut-off value may be selected based on comparison of the computationally determined air permeability of the virtual media domain in the transverse direction (i.e., the direction along the thickness) and experimentally determined air permeability of the entire filter media thickness in the transverse direction. In some such embodiments, the experimental air permeability of the entire filter media thickness may be determined according to TAPPI T-251, e.g., using a Textest FX 3300 air permeability tester III (Textest AG, Zurich), a sample area of 38 cm$^2$, and a pressure drop of 12.7 mm (0.5 inches) of water to obtain the Frasier permeability value of the entire filter media thickness in CFM. The Frasier permeability value in CFM is further converted to permeability in SI units according to the following conversion equation 11/m$^2$/s = 8.1 ft$^3$/ft$^2$/min (CFM) (2)

The air permeability of the virtual media domain in the transverse direction may be computed using the computational fluid dynamics (CFD) solution of Navier-Stokes equation. A virtual media domain is generated by preselecting an intensity threshold cut-off value and converting the grayscale images into a virtual domain media using the preselected intensity threshold cut-off value. Once, the virtual media domain is generated, numerical analysis can be performed directly on the virtual media domain using computational methods know to those of ordinary skill in the art. For example, GeoDict 2010R2 software package can be used to directly convert grayscale images into the virtual media domain and to efficiently solve Stoke's equation,

$$-\mu\nabla\nabla u + \nabla p = 0, \nabla\ u = 0, \qquad\qquad (3)$$

with no slip boundary conditions in the pore space (see, e.g., Wiegmann, 2001-2010 GEODICT virtual micro structure simulator and material property predictor.). The domain averaging of the resulting velocity field in transverse direction together with Darcy's equation,

$$<u> = -k\nabla p\ /\ \mu, \qquad\qquad (4)$$

allows determination of transverse air permeability **k** of virtual media.

The computational air permeability in the transverse direction is then compared to the experimental air permeability in the transverse direction. In embodiments in which the computational air permeability is substantially the same (e.g., a difference of 5% or less) as the experimental air permeability, then the virtual media domain generated using the preselected intensity threshold cut-off value is used to determine mean pore size. In embodiments in which the computational air permeability is different than the experimental air permeability, the intensity threshold cut-off value is changed until the computational air permeability is substantially the same as the experimental air permeability. The mean pore size of the virtual media domain that has substantially the same computational air permeability as the experimental air permeability can then be determined using any method known to those of ordinary skill in the art (e.g., PoroDict module of the GeoDict software package).

In some embodiments, the gradient in mean pore size may be across at least a portion of the thickness of the filter media or the entire thickness of the filter media. For instance, in some embodiments, the gradient in mean pore size may be across greater than or equal to about 10%, greater than or equal to about 20%, greater than equal to about 30%, greater than or equal to about 40%, greater than or equal to about 50%, greater than or equal to about 60%, greater than equal to about 70%, greater than or equal to about 80%, or greater than or equal to about 90% of the thickness of the overall filter media. In some instances, the gradient in mean pore size may be across less than or equal to about 100%, less than or equal to about 99%, less than or equal to about 97%, less than or equal to about 95%, less than equal to about 90%, less than or equal to about 80%, less than or equal to about 70%, less than or equal to about 60%, less than or equal to about 50%, less than or equal to about 40%, less than or equal to about 30%, or less than or equal to about 10% of the overall thickness of the filter media. All combinations of the above-reference ranges are possible (e.g., greater than or equal to about 10% and less than or equal to about 100%, greater than or equal to about 40% and less than or equal to about 100 percent). Other values are possible. The percentage of the total thickness of the filter media occupied by the gradient in mean pore size may be determined by dividing the thickness of the gradient portion by the thickness of the overall filter media.

In some embodiments, the thickness of the filter media may be greater than or equal to 0.05 mm, greater than or equal to about 0.1 mm, greater than or equal to about 0.5 mm, greater than or equal to about 1 mm, greater than or equal to about 3 mm, greater than or equal to about 5 mm, greater than or equal to about 8 mm, greater than or equal to about 10 mm, greater than or equal to about 12 mm, greater than equal to 15 mm, greater than or equal to about 18 mm, or greater than or equal to about 20 mm. In some instances, the uncompressed thickness of the filter media may be less than or equal to about 25 mm, less than or equal to about 22 mm, less than or equal to about 20 mm, less than or equal to about 18 mm, less than or equal to about 15 mm, less than or equal to about 12 mm, less than about 10 mm, less than or equal to about 8 mm, less than or equal to about 5 mm, or less than or equal to about 1 mm. All combinations of the above-referenced ranges are possible (e.g., greater than or equal to about 0.05 mm and less than or equal to about 25 mm, greater than or equal to about 0.1 mm and less than or equal to about 15 mm). Other values of thickness of the filter media are possible. The thickness of the entire filter media may be determined according to the standard ISO 534 at 1 N/cm$^2$. The thickness of the gradient portion may be determined using X-ray CT by generating a 3D representation of the entire thickness of filter media, as described above. Briefly, after the threshold values are determined for the virtual media domain, the thickness may be determined by analysis of the 3D representation of the filter media. In some embodiments, selected portion of the gradient portion may have the above-noted thickness values described herein for the gradient portion of the filter media.

In some embodiments, the solidity of the filter media may be greater than or equal to about 0.001, greater than or equal to about 0.005, greater than or equal to about 0.01, greater than or equal to about 0.03, greater than or equal to about 0.05, greater than or equal to about 0.08, greater than or equal to about 0.1, greater than or equal to about 0.15, greater than or equal to about 0.2, greater than or equal to about 0.25, greater than or equal to about 0.3, greater than or equal to about 0.35, greater than or equal to about 0.4, greater than or equal to about 0.45, greater than or equal to about 0.5, greater than or equal to about 0.55, greater than or equal to about 0.6, or greater than or equal to about 0.65. In some instances, the solidity of the filter media may be less than or equal to about 0.8, less than or equal to about 0.75, less than or equal to about 0.7, less than or equal to about 0.65, less than or equal to about 0.6, less than or equal to about 0.55, less than or equal to about 0.5, less than or equal to about 0.45, less than or equal to about 0.4, less than or equal to about 0.35, less than or equal to about 0.3, less than or equal to about 0.25, less than equal to about 0.2, or less than or equal to about 0.1. All combinations of the above-referenced ranges are possible. For example, in some applications (e.g., hydraulics, fuel, lube, water), the solidity of the filter media may be greater than or equal to about 0.001 and less than or equal to about 0.8, greater than or equal to about 0.01 and less than or equal to about 0.7, greater than or equal to about 0.01 and less than or equal to about 0.3, greater than or equal to about 0.03 and less than or equal to about 0.2, greater than or equal to about 0.03 and less than or equal to about 0.8, or greater than equal to about 0.1 and less than or equal to about 0.7. Other values of solidity are possible. Solidity may be determined by using the following formula: solidity = basis weight/ (fiber density * filter media thickness). The basis weight and filter media thickness may be determined as described herein.

In some embodiments, the filter media may have a basis weight of greater than or equal to about 0.1 g/m$^2$, greater than or equal to about 0.5 g/m$^2$, greater than or equal to about 1 g/m$^2$, greater than or equal to about 10 g/m$^2$, greater than or equal to about 25 g/m$^2$, greater than or equal to about 50 g/m$^2$, greater than or equal to about 100 g/m$^2$, greater than or equal to about 150 g/m$^2$, greater than or equal to about 200 g/m$^2$, greater than or equal to about 250 g/m$^2$, greater than or equal to about 300 g/m$^2$, greater than or equal to about 350 g/m$^2$, greater than or equal to about 400 g/m$^2$, greater than or equal to about 450 g/m$^2$, or greater than or equal to about 500 g/m$^2$. In some instances, the filter media may have a basis weight of less than or equal to about 600 g/m$^2$, less than or equal to about 550 g/m$^2$, less than or equal to about 500 g/m$^2$, less than or equal to about 450 g/m$^2$, less than or equal to about 400 g/m$^2$, less than or equal to about 350 g/m$^2$, less than or equal to about 300 g/m$^2$, less than or equal to about 250 g/m$^2$, less than or equal to about 200 g/m$^2$, less than or equal to about 150 g/m$^2$, less than or equal to about 100 g/m$^2$, less than or equal to about 50 g/m$^2$, less than or equal to about 25 g/m$^2$, less than or equal to about 10 g/m$^2$, or less than or equal to about 5 g/m$^2$. All combinations of the above-referenced ranges are possible (e.g., greater than or equal to about 0.1 g/m$^2$ and less than or equal to about 600 g/m$^2$, greater than or equal to about 0.5 g/m$^2$ and less than or equal to about 400 g/m$^2$). Other values of basis weight are possible. The basis weight may be determined according to the standard TAPPI T410.

A filter media having a gradient in a property, described herein, may also exhibit advantageous and enhanced filtration performance characteristics, such as dust holding capacity (DHC), beta rating, and air permeability. For instance, the filter media having a convex gradient (e.g., exponential gradient) in mean pore size may have enhanced filtration performance characteristics compared to filter media having another gradient in mean pore size. In some embodiments, the filter media may have an enhanced dust holding capacity. The dust holding capacity and beta rating may be determined based on the appropriate standard for a given application (e.g. hydraulic, fuel, lube, water). In some applications (e.g., hydraulics), the dust holding capacity tested may be determined using a Multipass Filter Test following the ISO 16889 procedure (i.e., a Multipass test) on a Multipass Filter Test Stand manufactured by FTI (e.g., Model No. TE9635). The testing uses ISO 12103-A3 medium grade test dust at a base upstream gravimetric dust level (BUGL) of 10 mg/liter on a 110 cm$^2$ sample area. The test fluid is Aviation Hydraulic Fluid AERO HFA MIL H-5606A manufactured by Mobil. The test is run at a face velocity of 0.3 cm/s until a terminal pressure of 100 kPa. In certain applications (e.g., lube), the dust holding capacity may be determined using ISO 4548-12 with a terminal pressure of 200 kPa at a face velocity of about 0.3 cm/sec In some applications (e.g., lube), the dust holding capacity may be determined using ISO 19438. In other applications (e.g. water), the dust holding capacity may be determined using EN 13-443-2 clogging with ISO 12103 A1 fine silica dust and a terminal pressure of 160 kPa. In general, particle counts at the particle sized selected and above (e.g., 1, 3, 4, 5, 7, 10, 15, 20, 25, or 30 $\mu$m) upstream and downstream of the media can be taken at ten points equally divided over the time of the test. The average of upstream and downstream particle counts can be taken at each selected particle size. From the average particle count upstream (injected -C0) and the average particle count downstream (passed thru-C) the filtration efficiency test value for each particle size selected can be determined by the relationship [(100-[C/C0])*100%]. The beta ratio is the ratio of the number of particles greater than a given size (x) in the fluid upstream of the media to the number of particles greater than the same size (x) downstream of the media.

In some embodiments, the filter media may have a DHC of greater than or equal to about 5 g/m$^2$, greater than or equal to about 10 g/m$^2$, greater than or equal to about 40 g/m$^2$, greater than or equal to about 70 g/m$^2$, greater than or equal to about 100 g/m$^2$, greater than or equal to about 150 g/m$^2$, greater than or equal to about 200 g/m$^2$, greater than or equal to about 250 g/m$^2$, greater than or equal to about 300 g/m$^2$, greater than or equal to about 350 g/m$^2$, or greater than or equal to about 400 g/m$^2$. In some instances, the DHC may be less than or equal to about 500 g/m$^2$, less than or equal to about 450 g/m$^2$, less than or equal to about 400 g/m$^2$, less than or equal to about 350 g/m$^2$, less than or equal to about 300 g/m$^2$, less than or equal to about 250 g/m$^2$, less than or equal to about 200 g/m$^2$, less than or equal to about 150 g/m$^2$, or less than or equal to about 100 g/m$^2$. All combinations of the above-referenced ranges are possible. For example, in some applications (e.g., hydraulic, fuel, lube, water), DHC may be greater than or equal to about 5 g/m$^2$ and less than or equal to about 500 g/m$^2$, greater than or equal to about 40 g/m$^2$ and less than or equal to about 500 g/m$^2$, greater than or equal to about 70 g/m$^2$ and less than or equal to about 500 g/m$^2$, or greater than or equal to about 10 g/m$^2$ and less than or equal to about 300 g/m$^2$. Other values of DHC are possible. The above ranges of DHC can be determined using any of the standards for dust holding capacity described above.

Efficiency of the filter media can be expressed in terms of a beta value (or beta ratio), where beta(x) = y is the ratio of upstream count (C0) to downstream count (C), and where x is the minimum particle size (i.e., beta particle size) that will achieve the actual ratio of C0 to C that is equal to y. The penetration fraction of the media is 1 divided by the beta(x) value (y), and the efficiency fraction is 1 - penetration fraction. Accordingly, the efficiency of the media is 100 times the efficiency fraction, and 100*(1 - 1/beta(x)) = efficiency percentage. For example, a filter media having a beta(x) = 200 has an efficiency of [1 - (1/200)]*100, or 99.5% for x $\mu$m or greater particles. The filter media described herein may have a wide range of beta values, e.g., a beta(x) = y, where x can be, for example, 1, 3, 5, 7, 10, 12, 15, 20, 25, 30, 50, 70, or 100, and where y can be, for example, at least 2, at least 10, at least 75, at least 100, at least 200, or at least 1000. It should also be understood that for any value of x, y may be any number (e.g., 10.2, 12.4) representing the actual ratio of C0 to C. Likewise, for any value of y, x may be any number representing the minimum particle size that will achieve the actual ratio of C0 to C that is equal to y.

In some embodiments, the filter media may have beta ratios (e.g., beta 200 and beta 1000) that are compatible with most filtration applications, including liquid applications. For instance, in some embodiments, the beta 200 particle size may be about greater than or equal about 0.01 $\mu$m, greater than or equal about 0.05 $\mu$m, greater than or equal about 0.1 $\mu$m, greater than or equal to about 0.3 $\mu$m, greater than or equal to about 0.5 $\mu$m, greater than or equal to about 1 $\mu$m, greater than or equal to 3 $\mu$m, greater than or equal to 4 $\mu$m, greater than or equal to about 5 $\mu$m, greater than or equal to 7 $\mu$m, greater than or equal to about 10 $\mu$m, greater than or equal to about 20 $\mu$m, greater than or equal to about 30 $\mu$m, greater than or equal to about 40 $\mu$m, greater than or equal to about 50 $\mu$m, greater than or equal to about 60 $\mu$m, or greater than or equal to about 75 $\mu$m. In some instances, the value of beta 200 particle size may be less than or equal to about 100 $\mu$m, less than or equal to about 80 $\mu$m, less than or equal to about 60 $\mu$m, less than or equal to about 50 $\mu$m, less than or equal to about 40 $\mu$m, less than or equal to about 30 $\mu$m, less than or equal to about 20 $\mu$m, less than or equal to about 10 $\mu$m, or less than or equal to about 5 $\mu$m. All combinations of the above-referenced ranges are possible (e.g., greater than or equal to about 0.1 $\mu$m and less than or equal to about 100 $\mu$m, greater than or equal to about 0.2 $\mu$m and less than or equal to about 60 $\mu$m). The beta 200 particle size may be determined based on the appropriate standard for a given application (e.g. hydraulic, fuel, lube, water). In some instances, the beta 200 particle size is determined using the testing described for dust holding capacity.

In some embodiments, the beta 1000 particle size may be greater than or equal about 0.01 $\mu$m, greater than or equal about 0.05 $\mu$m, greater than or equal about 0.1 $\mu$m, greater than or equal to about 0.5 $\mu$m, greater than or equal to about 1 $\mu$m, greater than or equal to 3 $\mu$m, greater than or equal to 4 $\mu$m, greater than or equal to about 5 $\mu$m, greater than or equal to 7, greater than or equal to about 10 $\mu$m, greater than or equal to about 20 $\mu$m, greater than or equal to about 30 $\mu$m, greater than or equal to about 40 $\mu$m, greater than or equal to about 50 $\mu$m, greater than or equal to about 60 $\mu$m, or greater than or equal to about 75 $\mu$m. In some instances, the value of beta 1000 particle may be less than or equal to about 100 $\mu$m, less than or equal to about 80 $\mu$m, less than or equal to about 60 $\mu$m, less than or equal to about 50 $\mu$m, less than or equal to about 40 $\mu$m, less than or equal to about 30 $\mu$m, less than or equal to about 20 $\mu$m, less than or equal to about 10 $\mu$m, or less than or equal to about 5 $\mu$m. All combinations of the above-referenced ranges are possible (e.g., greater than or equal to about 0.1 $\mu$m and less than or equal to about 100 $\mu$m, greater than or equal to about 0.2 $\mu$m and less than or equal to about 60 $\mu$m). The beta 1000 particle size may be determined based on the appropriate standard for a given application (e.g. hydraulic, fuel, lube, water). In some instances, the beta 1000 particle size is determined using the testing described for dust holding capacity.

In some embodiments, the filter media may have an air permeability of greater than or equal to about 0.1 CFM, greater than or equal to about 0.5 CFM, greater than or equal to about 1 CFM, greater than or equal to about 10 CFM, greater than or equal to about 50 CFM, greater than or equal to about 100 CFM, greater than or equal to about 200 CFM, greater than or equal to about 300 CFM, greater than or equal to about 400 CFM, greater than or equal to about 500 CFM, greater than or equal to about 600 CFM, greater than or equal to about 700 CFM, greater than or equal to about 800 CFM, or greater than or equal to about 900 CFM. In some instances, the filter media may have an air permeability of less than or equal to about 1,000 CFM, less than or equal to about 900 CFM, less than or equal to about 800 CFM, less than or equal to about 700 CFM, less than or equal to about 600 CFM, less than or equal to about 500 CFM, less than or equal to about 400 CFM, less than or equal to about 300 CFM, less than or equal to about 200 CFM, less than or equal to about 100 CFM, or less than or equal to about 50 CFM. All combinations of the above-referenced ranges are possible (e.g., greater than or equal to about 0.1 CFM and less than or equal to about 500 CFM, greater than or equal to about 1 CFM and less than or equal to about 300 CFM, greater than or equal to about 0.5 CFM and less than or equal to about 1,000 CFM, greater than or equal to about 1 CFM and less than or equal to about 200 CFM). Other values of air permeability are possible. The air permeability may be determined according to the standard TAPPI T-215 using a test area of 38 cm$^2$ and a pressure drop of 12.7 mm (0.5 inches) of water for non-water filtration applications and 254 mm (10 inches) of water for water filtration.

As noted above, for certain applications (e.g., hydraulics), the filter media may comprise an efficiency layer and a gradient including one or more layers. The gradient may function as a pre-filter layer that serves to enhance certain properties of the filter media, such as dust holding capacity, and the efficiency layer may have desirable properties including a high efficiency and/or low thickness. The filter media may be arranged such that the efficiency layer is positioned downstream of the gradient. In some embodiments, the gradient may be directly adjacent to the efficiency layer. In other embodiments, the gradient and efficiency layer may not be directly adjacent.

In some embodiments, the efficiency layer may comprise relatively small diameter fibers. In some cases, the efficiency layer includes nanofibers and/or microfibers. For instance, the fibers in the efficiency layer may have an average diameter of, for example, less than or equal to about 1.5 μm, less than or equal to about 1.2 μm, less than or equal to about 1.0 μm, less than or equal to about 0.8 μm, less than or equal to about 0.6 μm, less than or equal to about 0.4 μm, or less than or equal to about 0.2 μm. In certain embodiments, the fibers of the efficiency layer may have an average diameter of greater than or equal to about 0.1 μm, greater than or equal to about 0.3 μm, greater than or equal to about 0.5 um, or greater than or equal to about 0.8 μm. Combinations of the above-referenced ranges are also possible (e.g., less than or equal to about 1.0 μm and greater than or equal to about 0.2 μm). Other values of average fiber diameter are also possible.

In general, the efficiency layer may be formed by a suitable process. The efficiency layer may be a wet-laid layer (e.g., a layer formed by a wet laid process) or non-wet laid layer (e.g., it may include meltblown fibers, meltspun fibers, centrifugal spun fibers, air-laid fibers, dry-laid fibers, or fibers formed by other non-wet laid processes). For instance, an efficiency layer may comprise a layer of continuous fibers (e.g., meltblown fibers, meltspun fibers, centrifugal spun fibers, electrospun fibers).

In some embodiments, the efficiency layer may include more than one type of fiber. For example, in certain embodiments, the efficiency layer may include one or more of a synthetic fiber, a cellulose fiber (e.g., regenerated, Lyocell, etc.), fibrillated fiber, and/or a glass fiber as described herein with respect to the gradient.

The efficiency layer may have certain advantageous structural characteristics such as relatively small mean flow pore size and low thickness. For instance, in some embodiments, the efficiency layer may have an average mean flow pore size of less than or equal to about 15 μm, less than or equal to about 12 μm, less than or equal to about 10 μm, less than or equal to about 8 μm, less than or equal to about 6 μm, less than or equal to about 5 μm, less than or equal to about 4 μm, or less than or equal to about 2 μm. In some instances, the efficiency layer may have an average mean flow pore size of greater than or equal to about 1 μm, greater than or equal to about 3 μm, greater than or equal to about 4 μm, greater than or equal to about 5 μm, greater than or equal to about 6 μm, greater than or equal to about 8 μm, greater than or equal to about 10 μm, or greater than or equal to about 12 μm. Combinations of the above-referenced ranges are also possible (e.g., greater than or equal to about 1 μm and less than or equal to about 15 μm). Other values of average mean flow pore size are also possible. The mean flow pore size may be determined according to the standard ASTM E1294 (2008) (M.F.P.).

In some embodiments, the efficiency layer may be relatively thin. For instance, in some embodiments, the efficiency layer may have a thickness of less than or equal to about 1.0 mm, less than or equal to about 0.9 mm, less than or equal to about 0.5 mm, less than or equal to about 0.4 mm, less than or equal to about 0.3 mm, or less than or equal to about 0.2 mm. In some instances, the efficiency layer may have a thickness of greater than or equal to about 0.1 mm, greater than or equal to about 0.2 mm, greater than or equal to about 0.25 mm, greater than or equal to about 0.3 mm, greater than or equal to about 0.4 mm, greater than or equal to about 0.6 mm, or greater than or equal to about 0.8 mm. Combinations of the above-referenced ranges are also possible (e.g., a thickness of greater than or equal to about 0.1 mm and less than or equal to about 1.0 mm). Other values of thickness are also possible. The thickness may be determined according to the standard ISO 534 at 1 N/cm$^2$.

The efficiency layer may have advantageous performance properties, including efficiency and pressure drop. In some embodiments, the efficiency layer may have a relatively high efficiency. For instance, in some embodiments, the efficiency of the efficiency layer may be greater than or equal to about 80%, greater than or equal to about 90%, greater than or equal to about 95%, greater than or equal to about 96%, greater than or equal to about 97%, greater than or equal to about 98%, greater than or equal to about 99%, or greater than or equal to about 99.9%. In some instances, the efficiency of the efficiency layer may be less than or equal to about 99.99%, less than or equal to about 98%, less than or equal to about 97%, less than or equal to about 96%, or less than or equal to about 90%. Combinations of the above-referenced ranges are also possible (e.g., greater than or equal to about 80% and less than or equal to about 99.99%). Other values of the efficiency of the efficiency layer are also possible. The efficiency may be determined according to standard ISO 16889. As described in more detail below, efficiency can be measured at different particle sizes (e.g., for x μm or greater particles, where x is described below), and the above ranges of efficiency may be suitable for the various particle sizes described herein. In some embodiments, x is 4 μm such that the above ranges of efficiency are suitable for filtering out 4 μm or larger particles.

In some embodiments, the pressure drop of the efficiency layer may be relatively low. For instance, in some embodiments, the efficiency layer may have a pressure drop of less than or equal to about 150 Pa, less than or equal to about 130 Pa, less than or equal to about 110 Pa, less than or equal to about 90 Pa, less than or equal to about 70 Pa, less than or equal to about 50 Pa, or less than or equal to about 30 Pa. In some instances, the efficiency layer may have a pressure drop of greater than or equal to about 5 Pa, greater than or equal to about 10 Pa, greater than or equal to about 30 Pa, greater than or equal to about 50 Pa, greater than or equal to about 70 Pa, greater than or equal to about 90 Pa, or greater than or equal to about 110 Pa. Other values of pressure drop are also possible. Combinations of the above-referenced ranges are also possible (e.g., greater than or equal to about 5 Pa and less than or equal to about 150 Pa, greater than or equal to about 10 Pa and less than or equal to about 150 Pa, greater than or equal to about 30 Pa and less than or equal to about 150 Pa, greater than or equal to about 10 Pa and less than or equal to about 70 Pa, greater than or equal to about 5 Pa and less than or equal to about 30 Pa). The pressure drop, as described herein, can be determined at 3.2 m/min (10.5 FPM) face velocity using a TSI 8130 filtration tester.

In general, the efficiency layer may be any suitable weight percentage of the entire filter media. For instance, in some embodiments, the weight percentage of the efficiency layer in the entire filter media may be greater than or equal to about 2%, greater than or equal to about 10%, greater than or equal to about 15%, greater than or equal to about 20%, greater than or equal to about 25%, greater than or equal to about 30%, greater than or equal to about 35%, or greater than or equal to about 40%. In some instances, the weight percentage of the efficiency layer in the entire filter media may be less than or equal to about 50%, less than or equal to about 40%, less than or equal to about 30%, less than or equal to about 25%, less than or equal to about 20%, less than or equal to about 15%, less than or equal to about 10%, or less than or equal to about 5%. Combinations of the above-referenced ranges are also possible (e.g., a weight percentage of greater than or equal to about 10% and less than or equal to about 40%). Other values of weight percentage of the efficiency layer in the entire filter media are also possible.

In certain embodiments, the efficiency layer may include a single layer. In other embodiments, however, an efficiency layer may include more than one layer (i.e., sub-layers) to form a multi-layered structure. When a layer includes more than one sub-layer, the plurality of sub-layers may differ based on certain features such as air permeability, basis weight, fiber type, and/or efficiency. In certain cases, the plurality of sub-layers may be discrete and combined by any suitable method, such as lamination, point bonding, or collating. In some embodiments, the sub-layers are substantially joined to one another (e.g., by lamination, point bonding. thermo-dot bonding, ultrasonic bonding, calendering, use of adhesives (e.g., glue-web), and/or co-pleating). In some cases, sub-layers may be formed as a composite layer (e.g., by a wet laid process).

Any suitable filter media may be used as described herein. In some embodiments, the filter media may include one or more glass fibers (e.g., microglass fibers, chopped strand glass fibers, or a combination thereof). Microglass fibers and chopped strand glass fibers are known to those skilled in the art. One skilled in the art is able to determine whether a glass fiber is microglass or chopped strand by observation (e.g., optical microscopy, electron microscopy). Microglass fibers may also have chemical differences from chopped strand glass fibers. In some cases, though not required, chopped strand glass fibers may contain a greater content of calcium or sodium than microglass fibers. For example, chopped strand glass fibers may be close to alkali free with high calcium oxide and alumina content. Microglass fibers may contain 10-15% alkali (e.g., sodium, magnesium oxides) and have relatively lower melting and processing temperatures. The terms refer to the technique(s) used to manufacture the glass fibers. Such techniques impart the glass fibers with certain characteristics. In general, chopped strand glass fibers are drawn from bushing tips and cut into fibers in a process similar to textile production. Chopped strand glass fibers are produced in a more controlled manner than microglass fibers, and as a result, chopped strand glass fibers will generally have less variation in fiber diameter and length than microglass fibers. Microglass fibers are drawn from bushing tips and further subjected to flame blowing or rotary spinning processes. In some cases, fine microglass fibers may be made using a remelting process. In this respect, microglass fibers may be fine or coarse. As used herein, fine microglass fibers are less than or equal to 1 $\mu$m in diameter and coarse microglass fibers are greater than or equal to 1 $\mu$m in diameter.

The microglass fibers may have small diameters. For instance, in some embodiments, the average diameter of the microglass fibers may be less than or equal to about 9 $\mu$m, less than or equal to about 7 $\mu$m, less than or equal to about 5 $\mu$m, less than or equal to about 3 $\mu$m, or less than or equal to about 1 $\mu$m. In some instances, the microglass fibers may have an average fiber diameter of greater than or equal to about 0.1 $\mu$m, greater than or equal to about 0.3 $\mu$m, greater than or equal to about 1 $\mu$m, greater than or equal to about 3 $\mu$m, or greater than or equal to about 7 $\mu$m. Combinations of the above-referenced ranges are also possible (e.g., greater than or equal to about 0.1 $\mu$m and less than or equal to about 9 $\mu$m). Other values of average fiber diameter are also possible. Average diameter distributions for microglass fibers are generally log-normal. However, it can be appreciated that microglass fibers may be provided in any other appropriate average diameter distribution (e.g., Gaussian distribution).

In some embodiments, the average length of microglass fibers may be less than or equal to about 10 mm, less than or equal to about 8 mm, less than or equal to about 6 mm, less than or equal to about 5 mm, less than or equal to about 4 mm, less than or equal to about 3 mm, or less than or equal to about 2 mm. In certain embodiments, the average length of microglass fibers may be greater than or equal to about 1 mm, greater than or equal to about 2 mm, greater than or equal to about 4 mm, greater than or equal to about 5 mm, greater than equal to about 6 mm, or greater than or equal to about 8 mm. Combinations of the above referenced ranges are also possible (e.g., microglass fibers having an average length of greater than or equal to about 4 mm and less than about 6 mm). Other ranges are also possible.

In other embodiments, the microglass fibers may vary significantly in length as a result of process variations.

For instance, in some embodiments, the average aspect ratios (length to diameter ratio) of the microglass fibers in the filter media may be greater than or equal to about 100, greater than or equal to about 200, greater than or equal to about 300, greater than or equal to about 1000, greater than or equal to about 3,000, greater than or equal to about 6,000, greater than or equal to about 9,000. In some instances, the microglass fibers may have an average aspect ratio of less than or equal to about 10,000, less than or equal to about 5,000, less than or equal to about 2,500, less than or equal to about 600, or less than or equal to about 300. Combinations of the above-referenced ranges are also possible (e.g., greater than or equal to about 200 and less than or equal to about 2,500). Other values of average aspect ratio are also possible. It should be appreciated that the above-noted dimensions are not limiting and that the microglass fibers may also have other dimensions.

In some embodiments, in which microglass fibers are included in the filter media, the weight percentage of microglass fibers in the filter media may be greater than or equal to about 1 wt%, greater than or equal to about 10 wt%, greater than or equal to about 30 wt%, greater than or equal to about 50 wt%, greater than or equal to about 70 wt%, or greater than or equal to about 90 wt%. In some instances, the weight percentage of microglass fibers in the filter media may be less than or equal to about 100 wt%, less than or equal to about 95 wt%, less than or equal to about 80 wt%, less than or equal to about 60 wt%, less than or equal to about 40 wt%, less than or equal to about 20 wt%, or less than or equal to about 10 wt%. Combinations of the above-referenced ranges are also possible (e.g., greater than or equal to about 1 wt% and less than or equal to about 95 wt%). Other values of weight percentage of the microglass fibers in the filter media are also possible. In other embodiments, the filter media contains 0 wt% microglass fibers.

In general, chopped strand glass fibers may have an average fiber diameter that is greater than the diameter of the microglass fibers. For instance, in some embodiments, the average diameter of the chopped strand glass fibers may be greater than or equal to about 5 $\mu$m, greater than or equal to about 7 $\mu$m, greater than or equal to about 9 $\mu$m, greater than or equal to about 11 $\mu$m, or greater than or equal to about 20 $\mu$m. In some instances, the chopped strand glass fibers may have an average fiber diameter of less than or equal to about 30 $\mu$m, less than or equal to about 25 $\mu$m, less than or equal to about 15 $\mu$m, less than or equal to about 12 $\mu$m, or less than or equal to about 10 $\mu$m. Combinations of the above-referenced ranges are also possible (e.g., greater than or equal to about 5 $\mu$m and less than or equal to about 12 $\mu$m). Other values of average fiber diameter are also possible. Chopped strand diameters tend to follow a normal distribution. Though, it can be appreciated that chopped strand glass fibers may be provided in any appropriate average diameter distribution (e.g., Gaussian distribution).

In some embodiments, chopped strand glass fibers may have a length in the range of between about 3.175 mm (0.125 inches) and about 25.4 mm (1 inch), e.g., about 6.35 mm (0.25 inches), or about 12.7 mm (0.5 inches). In some embodiments, the average length of chopped strand glass fibers may be less than or equal to about 25.4 mm (1 inch), less than or equal to about 20.3 mm (0.8 inches), less than or equal to about 15.2 mm (0.6 inches), less than or equal to about 12.7 mm (0.5 inches), less than or equal to about 10.2 mm (0.4 inches), less than or equal to about 7.6 mm (0.3 inches), or less than or equal to about 5.1 mm (0.2 inches). In certain embodiments, the average length of chopped strand glass fibers may be greater than or equal to about 3.175 mm (0.125 inches), greater than or equal to about 5.1 mm (0.2 inches), greater than or equal to about 10.2 mm (0.4 inches), greater than or equal to about 12.7 mm (0.5 inches), greater than equal to about 15.2 mm (0.6 inches), or greater than or equal to about 20.3 mm (0.8 inches). Combinations of the above referenced ranges are also possible, e.g., chopped strand glass fibers having an average length of greater than or equal to about 3.175 mm (0.125 inches) and less than about 25.4 mm (1 inch). Other ranges are also possible.

It should be appreciated that the above-noted dimensions are not limiting and that the microglass and/or chopped strand fibers, as well as the other fibers described herein, may also have other dimensions.

In some embodiments, in which chopped strand glass fibers are included in the filter media, the weight percentage of chopped strand glass fibers in the filter media may be greater than or equal to about 1 wt%, greater than or equal to about 10 wt%, greater than or equal to about 30 wt%, greater than or equal to about 50 wt%, greater than or equal to about 70 wt%, or greater than or equal to about 90 wt%. In some instances, the weight percentage of chopped strand glass fibers in the filter media may be less than or equal to about 100 wt%, less than or equal to about 90 wt%, less than or equal to about 80 wt%, less than or equal to about 60 wt%, less than or equal to about 40 wt%, less than or equal to about 20 wt%, or less than or equal to about 5 wt%. Combinations of the above-referenced ranges are also possible (e.g., greater than or equal to about 1 wt% and less than or equal to about 60 wt%). Other values of weight percentage of the chopped strand glass fibers in the filter media are also possible. In other embodiments, the filter media contains 0 wt% chopped glass fibers.

In some embodiments, in which more than one type of glass fibers are included in the filter media, the total weight percentage of glass fibers (e.g., microglass fibers, chopped strand glass fibers, or a combination thereof) in the filter media may be greater than or equal to about 1 wt%, greater than or equal to about 10 wt%, greater than or equal to about 30 wt%, greater than or equal to about 50 wt%, greater than or equal to about 70 wt%, or greater than or equal to about 90 wt%. In some instances, the total weight percentage of glass fibers in the filter media may be less than or equal to about 100 wt%, less than or equal to about 95 wt%, less than or equal to about 80 wt%, less than or equal to about 60 wt%, less than or equal to about 40 wt%, less than or equal to about 20 wt%, or less than or equal to about 10 wt%. Combinations of the above-referenced ranges are also possible (e.g., greater than or equal to about 10 wt% and less than or equal to about 95 wt%). Other values of total weight percentage of the glass fibers in the filter media are also possible. In some embodiments, the filter media contains 100 wt% glass fibers. In other embodiments, the filter media contains 0 wt% glass fibers.

In some embodiments, the fibers in the filter media may include synthetic fibers. Synthetic fibers may be, for example, multi-component fibers (e.g., bicomponent, binder fibers), continuous fibers, and/or staple fibers. Synthetic fibers may include any suitable type of synthetic polymer. Examples of suitable synthetic fibers include polyester, polycarbonate, polyamide, polyaramid, polyimide, polyethylene, polypropylene, polyether ether ketone, polyethylene terephthalate, polyolefin, nylon, acrylics, polyvinyl alcohol, regenerated cellulose (e.g., lyocell, rayon), and combinations thereof. In some embodiments, the synthetic fibers are organic polymer fibers. In some cases, synthetic fibers may include meltblown fibers, which may be formed of polymers. In other cases, synthetic fibers may be electrospun fibers. The filter media may also include combinations of more than one type of synthetic fiber. In yet other cases, synthetic fibers may be staple fibers.

In one set of embodiments, the synthetic fibers are multi-component fibers. Each component of the multi-component fiber can have a different melting temperature. For example, bi-component fibers can include a core and a sheath where the activation temperature of the sheath is lower than the melting temperature of the core. This allows the sheath to melt prior to the core, such that the sheath binds to other fibers in the layer, while the core maintains its structural integrity. This is particularly advantageous in that it creates a more cohesive layer for trapping filtrate. The core/sheath binder fibers can be concentric or non-concentric, and exemplary core/sheath binder fibers can include the following: a polyester core/copolyester sheath, a polyester core/polyethylene sheath, a polyester core/polypropylene sheath, a polypropylene core/polyethylene sheath, and combinations thereof. Other exemplary multi-component fibers can include split fiber fibers, side-by-side fibers, and/or "island in the sea" fibers.

In some embodiments, the average diameter of the synthetic fibers in the filter media may be, for example, greater than or equal to about 0.1 $\mu$m, greater than or equal to about 0.3 $\mu$m, greater than or equal to about 0.5 $\mu$m, greater than or equal to about 1 $\mu$m, greater than or equal to about 2 $\mu$m, greater than or equal to about 3 $\mu$m, greater than or equal to about 4 $\mu$m, greater than or equal to about 5 $\mu$m, greater than or equal to about 8 $\mu$m, greater than or equal to about 10 $\mu$m, greater than or equal to about 12 $\mu$m, greater than or equal to about 15 $\mu$m, or greater than or equal to about 20 $\mu$m. In some instances, the synthetic fibers may have an average diameter of less than or equal to about 30 $\mu$m, less than or equal to about 20 $\mu$m, less than or equal to about 15 $\mu$m, less than or equal to about 10 $\mu$m, less than or equal to about 7 $\mu$m, less than or equal to about 5 $\mu$m, less than or equal to about 4 $\mu$m, less than or equal to about 1.5 $\mu$m, less than or equal to about 1 $\mu$m, less than or equal to about 0.8 $\mu$m, or less than or equal to about 0.5 $\mu$m. Combinations of the above-referenced ranges are also possible (e.g., greater than or equal to about 1 $\mu$m and less than or equal to about 5 $\mu$m). Other values of average fiber diameter are also possible.

In some cases, the synthetic fibers may be continuous (e.g., meltblown fibers, spunbond fibers, electrospun fibers, centrifugal spun fibers, etc.). For instance, synthetic fibers may have an average length of greater than or equal to about 25.4 mm (1 inch), greater than or equal to about 1.27 m (50 inches), greater than or equal to about 2.54 m (100 inches), greater than or equal to about 7.62 m (300 inches), greater than or equal to about 12.7 m (500 inches), greater than or equal to about 17.78 m (700 inches), or greater than or equal to about 22.86 m (900 inches). In some instances, synthetic fibers may have an average length of less than or equal to about 25.40 m (1000 inches), less than or equal to about 20.32 m (800 inches), less than or equal to about 15.24 m (600 inches), less than or equal to about 10.16 m (400 inches), or less than or equal to about 2.54 m (100 inches). Combinations of the above-referenced ranges are also possible (e.g., greater than or equal to about 1. 27 m (50 inches) and less than or equal to about 25.40 m (1000 inches). Other values of average fiber length are also possible.

In some embodiments, the synthetic fibers are not continuous (e.g., staple fibers). For instance, in some embodiments, the synthetic fibers in the filter media may have an average length of greater than or equal to about 2 mm, greater than or equal to about 4 mm, greater than or equal to about 6 mm, greater than or equal to about 8 mm, greater than or equal to about 10 mm, greater than or equal to about 15 mm, or greater than or equal to about 20 mm. In some instances, the synthetic fibers may have an average length of less than or equal to about 25 mm, less than or equal to about 20 mm, less than or equal to about 15 mm, less than or equal to about 12 mm, less than or equal to about 10 mm, less than or equal to about 8 mm, or less than or equal to about 5 mm. Combinations of the above-referenced ranges are also possible (e.g., greater than or equal to about 4 mm and less than or equal to about 20 mm). Other values of average fiber length are also possible. In some embodiments, in which synthetic fibers are included in the filter media, the weight percentage of synthetic fibers in the filter media may be greater than or equal to about 1 wt%, greater than or equal to about 10 wt%, greater than or equal to about 30 wt%, greater than or equal to about 50 wt%, greater than or equal to about 70 wt%, or greater than or equal to about 90 wt%. In some instances, the weight percentage of the synthetic fibers in the filter media may be less than or equal to about 100 wt%, less than or equal to about 80 wt%, less than or equal to about 60 wt%, less than or equal to about 40 wt%, less than or equal to about 20 wt%, or less than or equal to about 5 wt%. Combinations of the above-referenced ranges are also possible (e.g., greater than or equal to about 1 wt% and less than or equal to about 100 wt%). Other values of weight percentage of synthetic fibers in the filter media are also possible. In some embodiments, the filter media may include 100 wt% synthetic fibers. In other embodiments, the filter media may include 0 wt% synthetic fibers.

In some embodiments, the filter media may include one or more cellulose fibers, such as softwood fibers, hardwood fibers, a mixture of hardwood and softwood fibers, regenerated cellulose fibers, and mechanical pulp fibers (e.g., groundwood, chemically treated mechanical pulps, and thermomechanical pulps). Exemplary softwood fibers include fibers obtained from mercerized southern pine (e.g., mercerized southern pine fibers or "HPZ fibers", "HPZ XS fibers," and "HPZ III fibers" or "Porosanier fibers"), northern bleached softwood kraft (e.g., fibers obtained from Rottneros AB ("Robur Flash fibers")), southern bleached softwood kraft (e.g., fibers obtained from Brunswick pine ("Brunswick pine fibers")), or chemically treated mechanical pulps ("CTMP fibers"). For example, HPZ fibers, HPZ XS, and HPZ III can be obtained from Buckeye Technologies, Inc., Memphis, TN; Porosanier fibers can be obtained from Rayonier, Inc., Jacksonville, FL; Robur Flash fibers can be obtained from Rottneros AB, Stockholm, Sweden; Chinook fibers can be obtained from Domtar Corp., Montreal, QC; Brunswick pine and Leaf River fibers can be obtained from Georgia-Pacific, Atlanta, GA; and Tarascon fibers can be obtained from Paper Excellence, Vancouver, BC, Canada ("Tarascon fibers"). Exemplary hardwood fibers include fibers obtained from Eucalyptus ("Eucalyptus fibers"). Eucalyptus fibers are commercially available from, e.g., (1) Suzano Group, Suzano, Brazil ("Suzano fibers"), and (2) Group Portucel Soporcel, Cacia, Portugal ("Cacia fibers"). Other exemplary hardwood fibers may be obtained from New Page Corp., Miamisburg, OH ("Pinnacle Prime fibers").

In some embodiments, in which the filter media includes cellulose fibers, the average diameter of the cellulose fibers in the filter media may be, for example, greater than or equal to about 1 $\mu$m, greater than or equal to about 5 $\mu$m, greater than or equal to about 10 $\mu$m, greater than or equal to about 20 $\mu$m, greater than or equal to about 30 $\mu$m, greater than or equal to about 40 $\mu$m, greater than or equal to about 50 $\mu$m, or greater than or equal to about 60 $\mu$m. In some instances, the cellulose fibers may have an average diameter of less than or equal to about 75 $\mu$m, less than or equal to about 65 $\mu$m, less than or equal to about 55 $\mu$m, less than or equal to about 45 $\mu$m, less than or equal to about 35 $\mu$m, less than or equal to about 25 $\mu$m, less than or equal to about 15 $\mu$m, or less than or equal to about 5 $\mu$m. Combinations of the above-referenced ranges are also possible (e.g., greater than or equal to about 1 $\mu$m and less than or equal to about 5 $\mu$m). Other values of average fiber diameter are also possible.

In some embodiments, the cellulose fibers may have an average length. For instance, in some embodiments, cellulose fibers may have an average length of greater than or equal to about 0.5 mm, greater than or equal to about 1 mm, greater than or equal to about 3 mm, greater than or equal to about 6 mm, greater than or equal to about 8 mm, greater than or equal to about 10 mm, greater than or equal to about 15 mm, or greater than or equal to about 20 mm. In some instances, cellulose fibers may have an average length of less than or equal to about 25 mm, less than or equal to about 20 mm, less than or equal to about 15 mm, less than or equal to about 12 mm, less than or equal to about 10 mm, less than or equal to about 4 mm, or less than or equal to about 1 mm. Combinations of the above-referenced ranges are also possible (e.g., greater than or equal to about 1 mm and less than or equal to about 4 mm). Other values of average fiber length are also possible.

In some embodiments, the filter media may include a certain weight percentage of cellulose fibers. For example, the weight percentage of cellulose fibers in the filter media may be greater than or equal to about 1 wt%, greater than or equal to about 10 wt%, greater than or equal to about 30 wt%, greater than or equal to about 50 wt%, greater than or equal to about 70 wt%, or greater than or equal to about 90 wt%. In some instances, the weight percentage of cellulose fibers in the filter media may be less than or equal to about 100 wt%, less than or equal to about 90 wt%, less than or equal to about 80 wt%, less than or equal to about 60 wt%, less than or equal to about 40 wt%, less than or equal to about 20 wt%, or less than or equal to about 5 wt%. Combinations of the above-referenced ranges are also possible (e.g., greater than or equal to about 1 wt% and less than or equal to about 20 wt%). In certain embodiments, the filter media may include 0 wt% cellulose fibers. In some instances, the filter media may include 100 wt% cellulose fibers. Other values of weight percentage of cellulose fibers in the filter media are also possible.

In some embodiments, the filter media may include one or more fibrillated fibers (e.g., synthetic fibrillated fiber, fibrillated cellulose). As known to those of ordinary skill in the art, a fibrillated fiber includes a parent fiber that branches into smaller diameter fibrils, which can, in some instances, branch further out into even smaller diameter fibrils with further branching also being possible. The branched nature of the fibrils leads to a high surface area and can increase the number of contact points between the fibrillated fibers and the fibers in the filter media. Such an increase in points of contact between the fibrillated fibers and other fibers and/or components of the web may contribute to enhancing mechanical properties (e.g., flexibility, strength) and/or filtration performance properties of the filter media.

As noted above, fibrillated fibers include parent fibers and fibrils. In some embodiments the parent fibers may have an average diameter in the $\mu$m range. For example, the parent fibers may have an average diameter of greater than or equal to about 1 $\mu$m, greater than or equal to about 5 $\mu$m, greater than or equal to about 10 $\mu$m, greater than or equal to about 20 $\mu$m, greater than or equal to about 30 $\mu$m, greater than or equal to about 40 $\mu$m, greater than or

equal to about 50 μm, greater than or equal to about 60 μm, or greater than or equal to about 70 μm. In some embodiments, the parent fibers may have an average diameter of less than or equal to about 75 μm, less than or equal to about 55 μm, less than or equal to about 35 μm, less than or equal to about 25 μm, less than or equal to about 15 μm, less than or equal to about 10 μm, or less than or equal to about 5 μm. All combinations of the above referenced ranges are possible (e.g., parent fibers having an average diameter of greater than or equal to about 1 μm and less than or equal to about 25 μm). Other ranges are also possible.

In other embodiments, the parent fibers may have an average diameter in the nanometer range. For instance in, some embodiments, the parent fibers may have an average diameter of less than about 1 μm, less than or equal to about 0.8 μm, less than or equal to about 0.5 μm, less than or equal to about 0.1 μm, less than or equal to about 0.05 μm, less than or equal to about 0.02 μm, less than or equal to about 0.01 μm, or less than or equal to about 0.005 μm. In some embodiments the parent fibers may have an average diameter of greater than or equal to about 0.003 μm, greater than or equal to about 0.004 μm, greater than or equal to about 0.01 μm, greater than or equal to about 0.05 μm, greater than or equal to about 0.1 μm, or greater than or equal to about 0.5 μm. All combinations of the above referenced ranges are possible (e.g., parent fibers having an average diameter of greater than or equal to about 0.004 μm and less than about or equal to about 0.02 μm). Other ranges are also possible.

The average diameter of the fibrils is generally less than the average diameter of the parent fibers. Depending on the average diameter of the parent fibers, in some embodiments, the fibrils may have an average diameter of less than or equal to about 25 μm, less than or equal to about 20 μm, less than or equal to about 10 μm, less than or equal to about 5 μm, less than or equal to about 1 μm, less than or equal to about 0.5 μm, less than or equal to about 0.1 μm, less than or equal to about 0.05 μm, or less than or equal to about 0.01 μm. In some embodiments the fibrils may have an average diameter of greater than or equal to about 0.003 μm, greater than or equal to about 0.01 μm, greater than or equal to about 0.05 μm, greater than or equal to about 0.1 μm, greater than or equal to about 0.5 μm greater than or equal to about 1 μm, greater than or equal to about 5 μm, greater than or equal to about 10 μm, or greater than or equal to about 20 μm. All combinations of the above referenced ranges are possible (e.g., fibrils having an average diameter of greater than or equal to about 0.01 μm and less than or equal to about 20 μm). Other ranges are also possible.

In some embodiments, the average length of fibrillated fibers may be greater than or equal to about 0.05 μm, greater than or equal to about 0.1 μm, greater than or equal to about 0.5 μm, or greater than or equal to about 1 μm, greater than or equal to about 10 μm, greater than or equal to about 30 μm, greater than or equal to about 100 μm, greater than or equal to about 500 μm, greater than or equal to about 2,000 μm, greater than equal to about 5,000 μm, or greater than or equal to about 9,000 μm. In some instances, the average length of the fibrillated fibers may be less than or equal to about 12,000 μm, less than or equal to about 8,000 μm, less than or equal to about 4,000 μm, less than or equal to about 2,000 μm, less than or equal to about 1,000 μm, less than or equal to about 500 μm, less than or equal to about 100 μm, less than or equal to about 50 μm, less than or equal to about 1 μm, less than or equal to about 0.5 μm, less than or equal to about 0.1 μm, less than or equal to about 0.05 μm. All combinations of the above referenced ranges are possible (e.g., fibrillated fibers having an average length of greater than or equal to about 30 μm and less than about 2,000 μm). Other ranges are also possible. The average length of the fibrillated fibers refers to the average length of parent fibers from one end to an opposite end of the parent fibers. In some embodiments, the maximum average length of the fibrillated fibers falls within the above-noted ranges. The maximum average length refers to the average of the maximum dimension along one axis of the fibrillated fibers (including parent fibers and fibrils). It should be understood that, in certain embodiments, the fibers and fibrils may have dimensions outside the above-noted ranges.

The level of fibrillation of the fibrillated fibers may be measured according to any number of suitable methods. For example, the level of fibrillation can be measured according to a Canadian Standard Freeness (CSF) test, specified by TAPPI test method T 227 om 09 Freeness of pulp. The test can provide an average CSF value. In some embodiments, the average CSF value of the fibrillated fibers may be greater than or equal to about 0 mL, greater than or equal to about 50 mL, greater than or equal to about 100 mL, greater than or equal to about 300 mL, greater than or equal to about 500 mL, greater than or equal to about 800 mL, greater than or equal to about 1,000 mL or greater than or equal to about 1,200 mL. In some instances, the average CSF value of the fibrillated fibers may be less than or equal to about 1500 mL, less than or equal to about 1,200 mL, less than or equal to about 1,000 mL, less than or equal to about 800 mL, less than or equal to about 600 mL, less than or equal to about 400 mL, less than or equal to about 200 mL, or less than or equal to about 100 mL. All combinations of the above-referenced ranges are possible (e.g., an average CSF value of fibrillated fibers of greater than or equal to about 5 mL and less than or equal to about 35 mL). Other ranges are also possible. The average CSF value of the fibrillated fibers may be based on one type of fibrillated fiber or more than one type of fibrillated fiber.

In some embodiments, the filter media may include a certain weight percentage of fibrillated fibers. For example, the weight percentage of fibrillated fibers in the filter media may be greater than or equal to about 1 wt%, greater than or equal to about 10 wt%, greater than or equal to about 30 wt%, greater than or equal to about 50 wt%, greater than or equal to about 70 wt%, or greater than or equal to about 90 wt%. In some instances, the weight percentage of fibrillated fibers in the filter media may be less than or equal to about 100 wt%, less than or equal to about 90 wt%, less than or equal to about 80 wt%, less than or equal to about 60 wt%, less than or equal to about 40 wt%, less than or equal to about 20 wt%, or less than or equal to about 5 wt%. Combinations of the above-referenced ranges are also possible (e.g., greater than or equal to about 1 wt% and less than or equal to about 20 wt%). In certain embodiments, the filter media may include 0 wt% fibrillated fibers. In some embodiments, the filter media may include 100 wt% fibrillated fibers. Other values of weight percentage of fibrillated fibers in the filter media are also possible.

A fibrillated fiber may be formed of any suitable materials such as synthetic materials (e.g., synthetic polymers such as polyester, polyamide, polyaramid, polyimide, polyethylene, polypropylene, polyether ether ketone, polyethylene terephthalate, polyolefin, nylon, acrylics, regenerated cellulose (e.g., lyocell, rayon), poly p-phenylene-2,6-bezobisoxazole (PBO), and natural materials (e.g., natural polymers such as cellulose (e.g., non-regenerated cellulose)).

Fibers may be fibrillated through any appropriate fibrillation refinement process. In some embodiments, fibers are fibrillated using a disc refiner, a stock beater or any other suitable fibrillating equipment.

The filter media may also include a binder (e.g., loss on ignition). The binder typically comprises a small weight percentage of the filter media. For example, the binder may comprise less than or equal to about 20 wt%, less than or equal to about 15 wt%, less than or equal to about 10 wt%, or less than or equal to about 5 wt% (e.g., between 2 wt% and 5 wt%) of the filter media. In some embodiments, the binder may be about 3 wt% of the filter media. As described further below, the binder may be added to the fibers in the wet filter media state. In some embodiments, the binder coats the fibers and is used to adhere fibers to each other to facilitate adhesion between the fibers.

In general, the binder may have any suitable composition. In some embodiments, the binder is resin-based. The binder may be in the form of one or more components, for example, the binder may be in the form of multi-component fibers such as the ones described above. Though, it should be understood that not all embodiments include all of these components and that other appropriate additives may be incorporated.

In some embodiments, the gradient portion across a portion, or all, of the thickness of the filter media may have the above-noted fiber composition described herein for the entire filter media.

The filter media, as described herein, may be produced using any suitable processes, such as using a wet laid process (e.g., a process involving a pressure former, a rotoformer, a fourdrinier, a hybrid former, or a twin wire process) or a non-wet laid process (e.g., a dry laid process, an air laid process, a spunbond process, a meltblown process, an electrospinning process, a centrifugal spinning process, or a carding process).

In some embodiments, the filter media including the gradient portion may be formed by adhering (e.g., laminating) multiple (e.g., four, five, six, seven, eight, etc.) separately-formed layers together to form a multi-layer structure. Each of the layers may have a different mean pore size. In some embodiments, one or more of the layer(s) (e.g., 4 layers, all layers) may also have a relatively constant mean pore size across its thickness. In general, any suitable process (e.g., lamination, thermo-dot bonding, ultrasonic, calendering, glue-web, co-pleating, collation) for adhering the layers may be used. Such a process may result in a gradient in mean pore size across the thickness of filter media, as described herein.

In certain embodiments, a gradient portion of the filter media described herein may be formed by a continuous (e.g., wet laid) process. For example, a first dispersion containing fibers in a solvent (e.g., an aqueous solvent such as water) can be applied onto a wire conveyor in a papermaking machine (e.g., a fourdrinier or a rotoformer). A second dispersion (e.g., another pulp) containing fibers in a solvent (e.g., an aqueous solvent such as water) may be applied either at the same time or subsequent to the application of the first dispersion. Additional dispersions may be similarly applied. Vacuum is continuously applied to the dispersions of fibers during the above process to remove the solvent from the fibers. The article thus formed may then be dried and, if necessary, further processed (e.g., calendered). Such a process may result in a gradient in mean pore size across the thickness of the filter media, as described herein.

Any suitable method for creating a fiber dispersion may be used. In some embodiments, further additives are added to the dispersion to facilitate processing. The temperature may also be adjusted to a suitable range, for example, between 33 °F and 100 °F (e.g., between 50 °F and 85 °F). In some cases, the temperature of the slurry is maintained. In some instances, the temperature is not actively adjusted.

During or after formation of a gradient portion, the gradient portion may be further processed according to a variety of known techniques. Optionally, additional layers can be formed and/or added to the gradient portion using processes such as lamination, thermo-dot bonding, ultrasonic, calendering, glue-web, co-pleating, or collation. For example, more than one layer (e.g., meltblown layers, non-gradient layer) may be joined together by thermo-dot bonding, calendering, a glue web, or ultrasonic processes to form a layer (e.g., the second layer).

A non-gradient layer(s) described herein may be produced using any suitable processes, such as using a wet laid process (e.g., a process involving a pressure former, a rotoformer, a fourdrinier, a hybrid former, or a twin wire process) or a non-wet laid process (e.g., a dry laid process, an air laid process, a meltblown process, an electrospinning process, a centrifugal spinning process, or a carding process). In some embodiments, the filter media may undergo further processing after formation. In some embodiments, further processing may involve pleating. In some cases, the filter media, or various layers thereof, may be suitably pleated by forming score lines at appropriately spaced distances apart from one another, allowing the filter media to be folded. It should be appreciated that any suitable pleating technique may be used.

A filter media described herein may be used in an overall filtration arrangement or filter element. In some embodiments, one or more additional layers or components are included with the filter media (e.g., disposed adjacent to the fiber media, contacting one or both sides of the filter media). In some embodiments, multiple filter media in accordance with embodiments described herein may be layered together in forming a multi-layer sheet for use in a filter element.

The filter media can be incorporated into a variety of filter elements for use in various applications including hydraulic and non-hydraulic filtration applications Exemplary uses of hydraulic filters (e.g., high-, medium-, and low-pressure specialty filters) include mobile and industrial filters. Exemplary uses of non-hydraulic filters include fuel filters (e.g., ultra-low sulfur diesel), oil filters (e.g., lube oil filters or heavy duty lube oil filters), chemical processing filters, industrial processing filters, medical filters (e.g., filters for blood), fuel-water separators, and water filters. In some embodiments, a number of layers of filter medias may be wrapped around an inner substrate (e.g., a synthetic or metal core) to form a wrapped filter. For example, a wrapped filter may include between 5 and 10 layers of filter medias wrapped around the inner substrate. In some cases, the filter media described herein can be used as filter media for coalescing applications (e.g., using a wrapped filter). For example, such a filter media may be used to remove oil from compressed air. In some embodiments, filter media of the present application may be better suited for liquid filtration application than air filtration application, which utilize a different particle capture mechanism than liquid filtration. In some instances, the filter media described herein may be used as air filters. Exemplary air filters include heavy duty air filters, automotive air filters, HVAC filters, and HEPA filters.

EXAMPLES

Example 1

This example describes a simulation of the performance characteristics for filter media having a uniform, linear, concave, or convex gradient in mean pore size across the entire thickness of the media. Filter media having a convex gradient in mean pore size that was represented by an exponential function had an increased dust holding capacity compared to the filter media having a uniform, linear, or concave gradient in mean pore size.

The simulation was performed using software that can simulate multipass test results. The simulated filter media was a hydraulic filter media comprising 100 wt% glass fibers. The hydraulic filter media had a thickness of about 0.5 mm and a basis weight of about 62.5 g/m2. The hydraulic filter media had $\beta$200 in the range of about 2-40 $\mu$m and an air resistance in the range of about 0.3 -25 mmW depending on the mean pore size. The uniform, linear, concave, and convex gradient in mean pore size were modeled using the following equations:

1. Uniform gradient: *mean pore size =$a_1$=constant;*
2. Linear gradient: *mean pore size (x) = $a_2$ + $k_2$\*x;*
3. Concave gradient: *mean pore size (x) = $a_4$ + $k_4$ $x^{1/2}$;*
4. Convex gradient profile: *mean pore size (x) = $a_3$\* exp($k_3$\*x);*

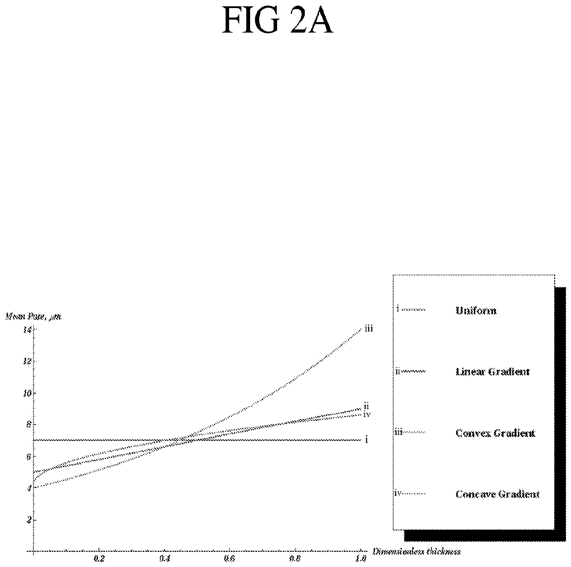

In the simulation, x was the dimensionless media thickness and ranged from 0 to 1, such that x=0 corresponding to the downstream side and x=1 to the upstream side of the media. Mean pore size (x) was the mean pore gradient across the media thickness and $a_i$ and $k_i$ were fitting constants. The fitting constant $a_i$ ranged from 2 $\mu$m to 60 $\mu$m and the fitting constant $k_i$ ranged from 0.3 to 1.5. A plot of mean pore size versus dimensionless thickness for the various gradients in mean pore size is shown in FIG. 2A.

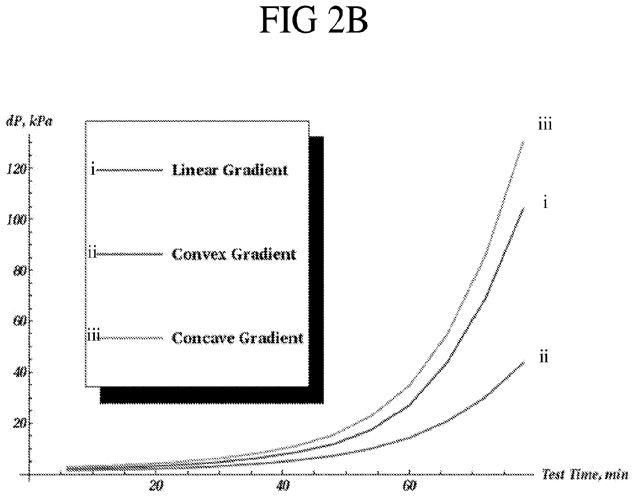

The dust holding capacity and beta 200 rating for the four gradients in mean pore size was computed by simulating an ISO 16889 multi-pass hydraulic media test for uniform, linear, concave, and convex gradient in mean pore size. A test flow rate of 1.7 L/min was used with a desired dust level of 10 mg/L, a sample are of 110 cm2, and a terminal pressure drop of 100 kPa. The computer graph of pressure drop versus loading time for the linear, concave and convex gradient filter media is shown in FIG. 2B. The computed dust holding capacity and beta 200 for the uniform, linear, concave, and convex gradient filter media is shown in Table 1.

Table 1. Dust holding capacity and beta 200 values for gradient filter media.

| | Gradient Function | | | |
|---|---|---|---|---|
| | Uniform | Linear | Convex | Concave |
| $\beta$(200), $\mu$m | 6.2 | 6 | 7 | 5.8 |
| DHC at 100kPa, gsm | 95 | 120 | 192 | 112 |

The filter media having a convex gradient in mean pore size that was represented by an exponential function had a dust holding capacity that was 102%, 60%, and 71% greater than the dust holding capacity of the uniform, linear, and concave gradients, respectively. The filter media having a convex gradient in mean pore size that was represented by an exponential function also had a comparable beta 200 particle size to the other gradients in mean pore size.

Example 2

This example describes the experimental verification of some of the simulation results described in Example 1. The performance characteristics filter media having a linear or an exponential gradient in mean pore size across the entire thickness of the filter media was determined. The filter media having an exponential gradient in mean pore size had higher air permeability, higher dust holding capacity, and a greater time to each terminal pressure drop than the filter media having a linear gradient.

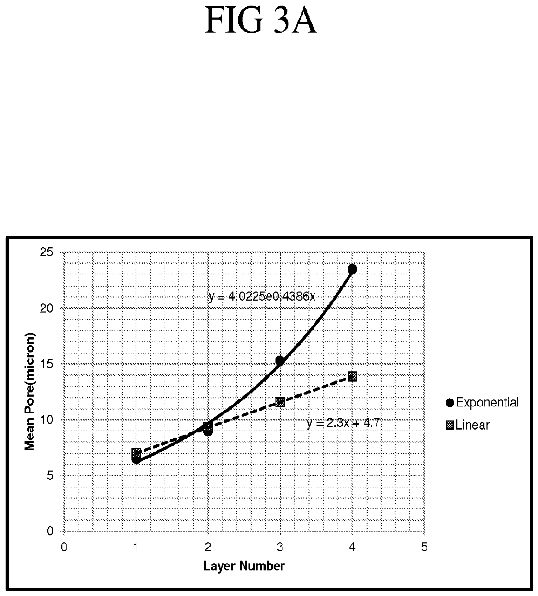

Each gradient filter media was a multi-layered filter media comprising glass fibers. Gradient filtration media was made by depositing 4 wet laid filter media layers. Each layer had a different ratio of JM 108 and 312 fiber manufactured by Hollingsworth & Vose Fiber Company. The basis weight of each layer was kept constant at 15 g/m$^2$. The ratio of JM 108 and 312 fibers in each layer was determined based on the mean pore size needed to achieve the appropriate gradient, i.e., linear or exponential. A plot of mean pore size versus layer number for the linear and exponential gradients in mean pore size is shown in FIG. 3A. The following empirical correlations:

1. Mean pore = 6 x $F_d$;
2. AR = $0.2(F_d)^{-1.82}$;
3.

$$AR = w_1(AR_{108}) + w_2(AR_{312});$$

4. $AR_{108} = 0.2(F_{D(108)})^{-1.82}$;
5. $AR_{312} = 0.2(F_{D(312)})^{-1.82}$;

were solved simultaneously to find the weight ratio of JM 108 and Evanite 312 fibers needed to produce the mean pore size for each layer, where $F_d$ was fiber diameter, AR was air resistance in mmH2O, $w_1$ and $w_2$ were weight ratio of JM 108 and Evanite 312 fiber, respectively, $F_{D(108)}$ = 1 $\mu$m, and $F_{D(312)}$ = 3.9 $\mu$m. The weight percentage of the JM 108 and 312 fibers for each layer of the linear and exponential gradient filter media is shown in table 2 and 3, respectively.

Table 2. Weight percentage of JM 108 and 312 fibers for the linear gradient

| Layer # | 108 (%) | 312 (%) | Mean pore size ($\mu$m) |
|---------|---------|---------|-------------------------|
| 1 | 60 | 40 | 7 |
| 2 | 40 | 60 | 9.3 |
| 3 | 26 | 74 | 11.6 |
| 4 | 17 | 83 | 13.9 |

Table 3. Weight percentage of JM 108 and 312 fibers for the exponential gradient

| Layer # | 108 (%) | 312 (%) | Mean pore size ($\mu$m) |
|---------|---------|---------|-------------------------|
| 1 | 68 | 32 | 6.5 |
| 2 | 41 | 59 | 9 |
| 3 | 17 | 83 | 15.3 |
| 4 | 0 | 100 | 23.5 |

To form the multi-layered filter media for each gradient, each layer with fiber blend shown in tables 2 or 3 was deposited in a handsheet mold sequentially starting with layer 1, such that layer 1 was the most downstream layer and layer 4 was the most upstream layer. The physical properties of the multi-layered filter media having a gradient in mean pore size is shown in Table 4. The filter media having a linear gradient had substantially the same basis weight, thickness, mean pore size as the filter media having an exponential gradient. However, the filter media having an exponential gradient in mean pore size had a about a 30% greater air permeability than the filter media having a linear gradient in mean pore size.

Table 4: Properties of filter media having a linear or exponential gradient

| Gradient | Basis weight | Thickness | Mean pore size | air permeability |
|---|---|---|---|---|
| Linear | 61.9 g/m$^2$ | 0.721 mm | 8.7918 $\mu$m | 23.5 ft/min |
| Exponential | 60.1 g/m$^2$ | 0.777 mm | 8.4321 $\mu$m | 30.5 ft/min |

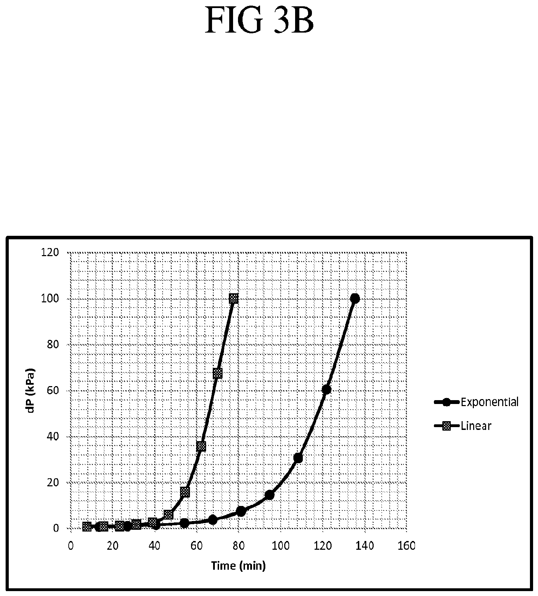

The dust holding capacity and beta 200 particle size for the filter media having a linear and exponential gradient in mean pore size was determined using the ISO 16889 multi-pass hydraulic media test. A test flow rate of 1.7 L/min was used with a desired dust level of 10 mg/L and a terminal pressure drop of 100 kPa. The graph of pressure drop versus loading time for the linear and exponential gradient filter media is shown in FIG. 3B. As shown in FIG. 3B, the filter media having a linear gradient size took about 78 minutes to reach terminal pressure drop of 100 kPa and the filter media having an exponential gradient took about 135 minutes to reach same terminal pressure drop. Thus, the filter media having an exponential gradient in mean pore size had a 73% greater filter life time than the filter media having a linear gradient size. Dust holding capacity (DHC) of the filter media having a linear gradient was about 126 g/m$^2$ compared to about 214 g/m$^2$ for the filter media having an exponential gradient. Thus, the filter media having an exponential gradient had about a 70% increase in dust holding capacity compared to the filter media having a linear gradient.

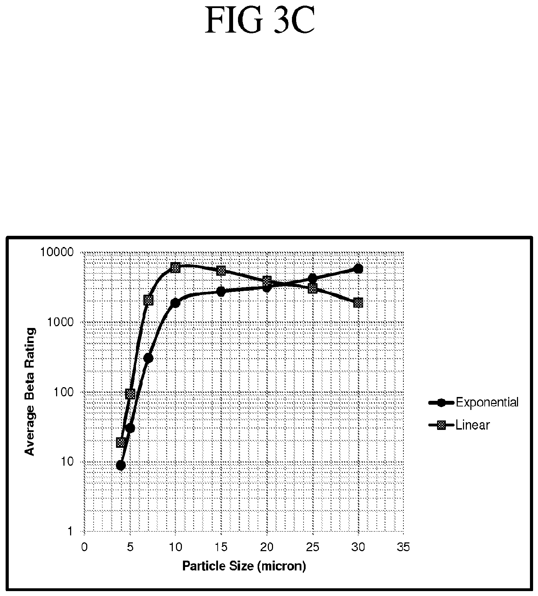

The graph of average beta 200 rating versus particle size for the linear and exponential gradient filter media is shown in FIG. 3C. The average Beta 200 particle size for the filter media having an exponential gradient in mean pore size was about 6.5 $\mu$m which was comparable to 5.5 $\mu$m for the filter media having a linear gradient.

Table 5: Filtration properties for filter media having a linear or exponential gradient

| Gradient | Units | Linear | Exponential |
|---|---|---|---|
| Time to reach terminal dP | (min) | 78 | 135 |
| DHC | (g/m$^2$) | 126 | 214 |
| Average beat 200 particle size | ($\mu$m) | 5.5 | 6.5 |

Example 3

This example describes a simulation of the performance characteristics for various filter media having an exponential gradient in mean pore size, as described in Example 1, that differ only in the value of the fitting parameter $k_3$. Values of $k_3$ greater than zero and less than or equal to about 1.5 were found to have advantageous filtration properties.

The simulations were performed as described in example 1, except five filter media having an exponential gradient in mean pore size that differed only in the value the fitting parameter $k_3$ were simulated.

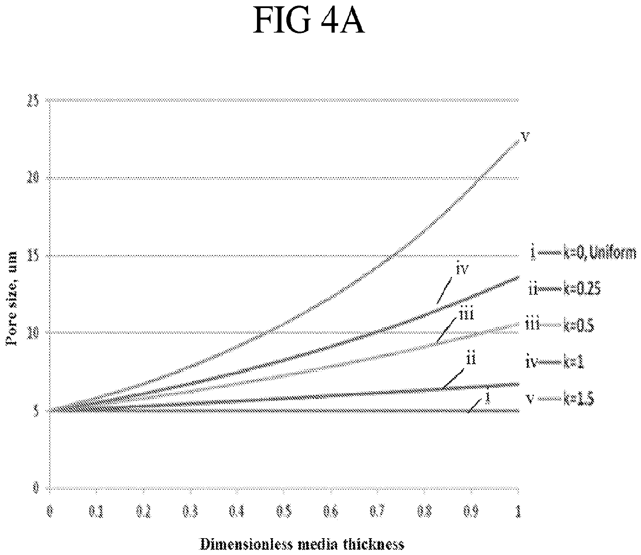

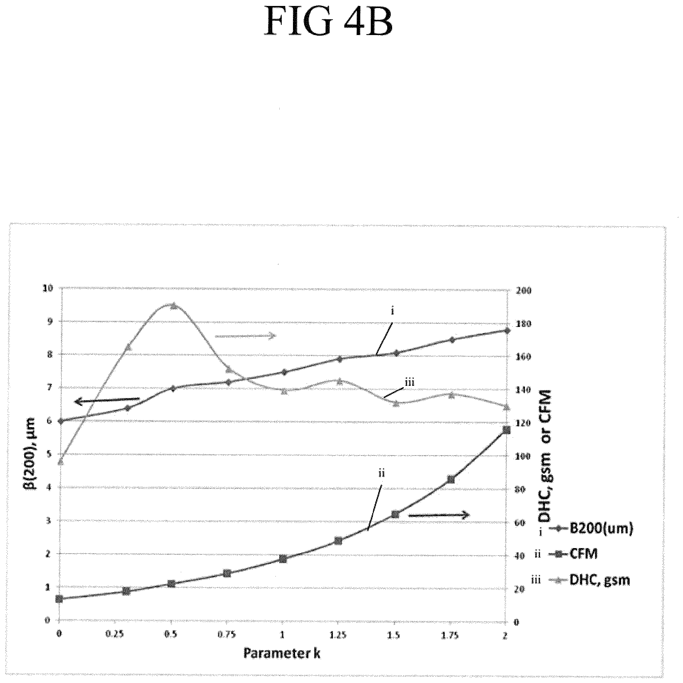

The five values of $k_3$ were 0, 0.25, 0.5, 1.0, and 1.5. A plot of mean pore size versus dimensionless thickness for the various values of $k_3$ is shown in FIG. 4A. A plot of the computed dust holding capacity, air permeability, and beta 200 particle size versus values of $k_3$ is shown in FIG. 4B. As shown in FIG. 4B, values of $k_3$ between about 0.25 and about 0.75 has the highest dust holding capacity and relatively low beta 200 particle sizes. Values of $k_3$ greater than 1.5 had significantly lower dust holding capacity and relatively high beta 200 particle sizes.

Example 4

This example describes the dust holding capacity of two filter media containing a dual phase pre-filter having an exponential gradient in mean pore size and a downstream, directly adjacent efficiency layer comprising relatively small diameter fibers. The filter media had relatively high dust holding capacity and a high efficiency.

Two filter media differing only in the type of exponential gradient in mean pore size of the pre-filter were formed. Filter media A contained pre-filter A and the efficiency layer. The gradient profile of filter A was *mean pore size (x) = a∗exp(k∗x)* wherein *a* was 13 and *k* was 0.6. Filter media B contained pre-filter B and the efficiency layer. The gradient profile of filter B was *mean pore size (x) = a∗exp(k∗x)* wherein *a* was 12.9 and *k* was 1.13. The pre-filters were formed by varying the weight percentage of fibers having different fiber diameters to form the desired exponential gradient in mean pore size across the two layers of the pre-filter. The efficiency layer was formed from by a meltblown process and contained synthetic fibers having a diameter of about 1.0 μm. The efficiency layer had a thickness of about 0.2 mm and a pressure drop of about 20 Pa at 3.2 m/min (10.5 FPM).

The basis weight and Frasier Permeability of the efficiency layer, pre-filter A, and pre-filter B are shown in Table 6.

Table 6. Select properties of the pre-filters and efficiency layer.

| | | Basis Weight | Frasier Permeability |
|---|---|---|---|
| | | g/m$^2$ | CFM |
| Efficiency layer | | 37 | 62 |
| Pre - filter A | Overall | 85 | 45 |
| | Downstream layer | 50 | 64 |
| | Upstream layer | 35 | 142 |
| Pre - filter B | Overall | 85 | 104 |
| | Downstream layer | 50 | 142 |
| | Upstream layer | 35 | 302 |

The dust holding capacity and beta 200 particle size for the filter media was determined using the ISO 16889 as described in Example 2. Filter media having a gradient pre-filter and an efficiency layer had a relatively high dust holding capacity and a good beta 200 rating. The dust holding capacity and the beta 200 ratings of the filter media are shown in Table 7.

Table 7. Filtration properties for filter media having a gradient pre-filter.

| | $\beta_{200}$, μm | DHC (g/m$^2$) |
|---|---|---|
| Pre-filter A + efficiency layer | 14.2 | 155 |
| Pre-filter B + efficiency layer | 16.7 | 91 |

**Claims**

1. A filter media having a gradient in mean pore size across at least a portion of the thickness of the filter media, wherein the gradient is represented by an exponential function fit to four numerical values of the mean pore size determined at different points across at least the portion of the thickness of the filter media, the exponential function having the form:

$$\text{mean pore size}(x) = a * \exp(k * x)$$

wherein x corresponds to a location along the thickness of the portion of the filter media and is normalized to have a value greater than or equal to 0 and less than or equal to 1, and
wherein k is greater than or equal to 0.1 and less than or equal to 1.75 and a is greater than or equal to 0.1 μm and less than or equal to 100 μm;
wherein the exponential function is determined using a least squares linear regression model; and
wherein the coefficient of determination $R^2$ of the exponential function is greater than or equal to 0.9.

2. A method, comprising:

providing a filter media having a gradient in mean pore size across at least a portion of the thickness of the filter media, wherein the gradient is represented by an exponential function fit to four numerical values of the mean pore size determined at different points across at least the portion of the thickness of the filter media, the exponential function having the form:

$$\text{mean pore size}(x) = a * \exp(k * x)$$

wherein x corresponds to a location along the thickness of the portion of the filter media and is normalized to have a value greater than or equal to 0 and less than or equal to 1, and

wherein k is greater than or equal to 0.1 and less than or equal to 1.75 and a is greater than or equal to 0.1 $\mu$m and less than or equal to 100 $\mu$m;

wherein the exponential function is determined using a least squares linear regression model, and wherein the coefficient of determination $R^2$ of the exponential function is greater than or equal to 0.9; and filtering a liquid using the filter media.

3. The filter media of claim 1, or the method of claim 2, wherein:

a) a is greater than or equal to 2 $\mu$m and less than or equal to 60 $\mu$m and/or
b) k is greater than or equal to 0.25 and less than or equal to 0.75 and/or
c) k is less than or equal to 1.5.

4. The filter media of claim 1 or 3, or the method of claim 2 or 3, wherein the gradient in mean pore size is across the entire thickness of the filter media.

5. The filter media of any of claims 1 and 3 to 4, or the method of any of claims 2, 3 and 4, wherein:

a) the dust holding capacity of the filter media as determined by ISO EN 13-443-2 is greater than or equal to 5 g/m$^2$ and less than or equal to 500 g/m$^2$, optionally wherein the dust holding capacity is greater than or equal to 10 g/m$^2$ and less than or equal to 300 g/m$^2$,
b) wherein the dust holding capacity of the filter media as determined by ISO 16889, ISO 4548-12, or ISO 19438 is greater than or equal to 40 g/m$^2$ and less than or equal to 500 g/m$^2$, optionally

wherein the dust holding capacity is greater than or equal to 70 g/m$^2$ and less than or equal to 500 g/m$^2$

6. The filter media of any of claims 1, 3 to 5, or the method of any of claims 2 to 5, wherein a change in mean pore size along the gradient in mean pore size is greater than or equal to 1 $\mu$m and less than or equal to 100 $\mu$m.

7. The filter media of any of claims 1, 3 to 6, or the method of any of claims 2 to 6, wherein the filter media is a multi-layered filter media.

8. The filter media of any of claims 1, 3 to 7, or the method of any of claims 2 to 7, wherein the coefficient of determination of the exponential function is greater than all coefficient of determinations for linear functions fit to the four numerical values of the mean pore size using the least squares linear regression model.

9. The filter media of any of claims 1, 3 to 8, or the method of any of claims 2 to 8, wherein the portion of the thickness of the filter media is greater than or equal to 20% of the thickness of the gradient.

10. The filter media of any of claims 1, 3 to 9, or the method of any of claims 2 to 9, wherein the filter media comprises glass fibers and/or the filter media comprises synthetic fibers.

11. The filter media of any of claims 1, 3 to 10, or the method of any of claims 2 to 10, wherein the filter media has a basis weight of greater than or equal to 0.5 g/m$^2$ and less than or equal to 400 g/m$^2$

12. The filter media of any of claims 1, 3 to 11, or the method of any of claims 2 to 11, wherein:

a) the filter media has a beta 200 particle size as determined by ISO 16889 of greater than or equal to 2 $\mu$m and less than or equal to 60 $\mu$m, and/or
b) the filter media has a beta 200 particle size as determined by ISO 19438 of greater than or equal to 2 $\mu$m and less than or equal to 40 $\mu$m, and/or
c) the filter media has a beta 200 particle size as determined by ISO 4548-12 of greater than or equal to 10 $\mu$m and less than or equal to 30 $\mu$m, and/or
d) the filter media has a beta 200 particle size as determined by ISO EN 13-443-2 of greater than or equal to 0.05 $\mu$m and less than or equal to 5 $\mu$m

13. The filter media of any of claims 1, 3 to 12, or the method of any of claims 2 to 12, wherein the gradient in mean pore size is across four or more layers of the filter media, optionally wherein at least four of the four or more layers have a constant mean pore size.

14. The filter media of any of claims 1, 3 to 13, or the method of any of claims 2 to 13, wherein the filter media further comprises an efficiency layer having an average fiber diameter of less than or equal to 1 $\mu$m


**Patentansprüche**

1. Filtermedium, das einen Gradienten in mittlerer Porengröße über zumindest einen Abschnitt der Dicke des Filtermediums aufweist, wobei der Gradient durch eine Exponentialfunktion dargestellt ist, die für vier Zahlenwerte der mittleren Porengröße passend ist, die an verschiedenen Punkten über zumindest einen Abschnitt der Dicke des Filtermediums bestimmt werden, wobei die Exponentialfunktion die folgende Form aufweist:

$$\text{mittlere Porengröße}(x) = a*\exp(k*x)$$

wobei x einer Stelle entlang der Dicke des Abschnitts des Filtermediums entspricht und normalisiert ist, um einen Wert aufzuweisen, der größer als oder gleich 0 und kleiner als oder gleich 1 ist und
wobei k größer als oder gleich 0,1 und kleiner als oder gleich 1,75 ist und a größer als oder gleich 0,1 $\mu$m und kleiner als oder gleich 100 $\mu$m ist;
wobei die Exponentialfunktion unter Verwendung eines linearen Regressionsmodells kleinster Quadrate bestimmt wird; und
wobei der Bestimmungskoeffizient R$^2$ der Exponentialfunktion größer als oder gleich 0,9 ist.

2. Verfahren, umfassend:
Bereitstellen eines Filtermediums, das einen Gradienten in mittlerer Porengröße über zumindest einen Abschnitt der Dicke des Filtermediums aufweist, wobei der Gradient durch eine Exponentialfunktion dargestellt ist, die für vier Zahlenwerte der mittleren Porengröße passend ist, die an verschiedenen Punkten über zumindest einen Abschnitt der Dicke des Filtermediums bestimmt werden, wobei die Exponentialfunktion die folgende Form aufweist:

$$\text{mittlere Porengröße}(x) = a*\exp(k*x)$$

wobei x einer Stelle entlang der Dicke des Abschnitts des Filtermediums entspricht und normalisiert ist, einen Wert aufzuweisen, der größer als oder gleich 0 und kleiner als oder gleich 1 ist und
wobei k größer als oder gleich 0,1 und kleiner als oder gleich 1,75 ist und a größer als oder gleich 0,1 $\mu$m und kleiner als oder gleich 100 $\mu$m ist;
wobei die Exponentialfunktion unter Verwendung eines linearen Regressionsmodells kleinster Quadrate bestimmt wird und
wobei der Bestimmungskoeffizient R$^2$ der Exponentialfunktion größer als oder gleich 0,9 ist; und
Filtern einer Flüssigkeit unter Verwendung des Filtermediums.

3. Filtermedium nach Anspruch 1 oder Verfahren nach Anspruch 2, wobei:

a) a größer als oder gleich 2 $\mu$m und kleiner als oder gleich 60 $\mu$m ist, und/oder
b) k größer als oder gleich 0,25 und kleiner als oder gleich 0,75 ist und/oder
c) k kleiner als oder gleich 1,5 ist.

4. Filtermedium nach Anspruch 1 oder 3 oder Verfahren nach Anspruch 2 oder 3, wobei der Gradient in mittlerer Porengröße über die gesamte Dicke des Filtermediums ist.

5. Filtermedium nach einem der Ansprüche 1 und 3 bis 4 oder Verfahren nach einem der Ansprüche 2, 3 und 4, wobei:

a) die Staubhaltekapazität des Filtermediums, wie durch ISO EN 13-443-2 bestimmt, größer als oder gleich 5 g/m$^2$ und kleiner als oder gleich 500 g/m$^2$ ist, wobei optional die Staubhaltekapazität größer als oder gleich 10 g/m$^2$ und kleiner als oder gleich 300 g/m$^2$ ist,
b) wobei die Staubhaltekapazität des Filtermediums, wie durch ISO 16889, ISO-4548-12 oder ISO 19438 bestimmt, größer als oder gleich 40 g/m$^2$ und kleiner als oder gleich 500 g/m$^2$ ist,

wobei optional die Staubhaltekapazität größer als oder gleich 70 g/m$^2$ und kleiner als oder gleich 500 g/m$^2$ ist.

6. Filtermedium nach einem der Ansprüche 1, 3 bis 5 oder Verfahren nach einem der Ansprüche 2 bis 5, wobei eine Änderung in der mittleren Porengröße entlang des Gradienten in mittlerer Porengröße größer als oder gleich 1 μm und kleiner als oder gleich 100 μm ist.

7. Filtermedium nach einem der Ansprüche 1, 3 bis 6 oder Verfahren nach einem der Ansprüche 2 bis 6, wobei das Filtermedium ein mehrschichtiges Filtermedium ist.

8. Filtermedium nach einem der Ansprüche 1, 3 bis 7 oder Verfahren nach einem der Ansprüche 2 bis 7, wobei der Bestimmungskoeffizient der Exponentialfunktion größer als alle Bestimmungskoeffizienten für lineare Funktionen ist, die für die vier Zahlenwerte der mittleren Porengröße unter Verwendung des Regressionsmodells kleinster Quadrate passend ist.

9. Filtermedium nach einem der Ansprüche 1, 3 bis 8 oder Verfahren nach einem der Ansprüche 2 bis 8, wobei der Abschnitt der Dicke des Filtermediums größer als oder gleich 20% der Dicke des Gradienten ist.

10. Filtermedium nach einem der Ansprüche 1, 3 bis 9 oder Verfahren nach einem der Ansprüche 2 bis 9, wobei das Filtermedium Glasfasern umfasst und/oder das Filtermedium Kunstfasern umfasst.

11. Filtermedium nach einem der Ansprüche 1, 3 bis 10 oder Verfahren nach einem der Ansprüche 2 bis 10, wobei das Filtermedium ein Basisgewicht größer als oder gleich 0,5 g/m$^2$ und kleiner als oder gleich 400 g/m$^2$ aufweist.

12. Filtermedium nach einem der Ansprüche 1, 3 bis 11 oder Verfahren nach einem der Ansprüche 2 bis 11, wobei:

a) das Filtermedium eine Beta 200 Partikelgröße, wie durch ISO 16889 bestimmt, größer als oder gleich 2 μm und kleiner als oder gleich 60 μm aufweist und/oder
b) das Filtermedium eine Beta 200 Partikelgröße, wie durch ISO 19438 bestimmt, größer als oder gleich 2 μm und kleiner als oder gleich 40 μm aufweist und/oder
c) das Filtermedium eine Beta 200 Partikelgröße, wie durch ISO 4548-12 bestimmt, größer als oder gleich 10 μm und kleiner als oder gleich 30 μm aufweist und/oder
d) das Filtermedium eine Beta 200 Partikelgröße, wie durch ISO EN 13-443-2 bestimmt, größer als oder gleich 0,05 μm und kleiner als oder gleich 5 μm aufweist.

13. Filtermedium nach einem der Ansprüche 1, 3 bis 12 oder Verfahren nach einem der Ansprüche 2 bis 12, wobei der Gradient in mittlerer Porengröße über vier oder mehr Schichten des Filtermediums verläuft, wobei optional zumindest vier der vier oder mehr Schichten eine konstante mittlere Porengröße aufweisen.

14. Filtermedium nach einem der Ansprüche 1, 3 bis 13 oder Verfahren nach einem der Ansprüche 2 bis 13, wobei das Filtermedium weiter eine Effizienzschicht umfasst, die eine durchschnittlichen Faserdurchmesser kleiner als oder gleich 1 μm aufweist.

**Revendications**

1. Milieu filtrant présentant un gradient dans une taille de pore moyenne à travers au moins une partie de l'épaisseur du milieu filtrant, dans lequel le gradient est représenté par une fonction exponentielle fixée à quatre valeurs numériques de la taille de pore moyenne déterminée à différents points à travers au moins la partie de l'épaisseur du milieu filtrant, la fonction exponentielle présentant la forme :

$$\text{taille de pore moyenne}(x) = a*\exp(k*x)$$

dans lequel x correspond à un emplacement le long de l'épaisseur de la partie du milieu filtrant et est normalisé pour présenter une valeur supérieure ou égale à 0 et inférieure ou égale à 1, et
dans lequel k est supérieur ou égal à 0,1 et inférieur ou égal à 1,75 et a est supérieur ou égal à 0,1 μm et

inférieur ou égal à 100 $\mu$m ;

dans lequel la fonction exponentielle est déterminée à l'aide d'un modèle de régression linéaire des moindres carrés ; et

dans lequel le coefficient de détermination $R^2$ de la fonction exponentielle est supérieur ou égal à 0,9.

2. Procédé comprenant :

la fourniture d'un milieu filtrant présentant un gradient dans une taille de pore moyenne à travers au moins une partie de l'épaisseur du milieu filtrant, dans lequel le gradient est représenté par une fonction exponentielle fixée à quatre valeurs numériques de la taille de pore moyenne déterminée à différents points à travers au moins la partie de l'épaisseur du milieu filtrant, la fonction exponentielle présentant la forme :

$$\text{taille de pore moyenne}(x) = a*\exp(k*x)$$

dans lequel x correspond à un emplacement le long de l'épaisseur de la partie du milieu filtrant et est normalisé pour présenter une valeur supérieure ou égale à 0 et inférieure ou égale à 1, et

dans lequel k est supérieur ou égal à 0,1 et inférieur ou égal à 1,75 et a est supérieur ou égal à 0,1 $\mu$m et inférieur ou égal à 100 $\mu$m ;

dans lequel la fonction exponentielle est déterminée à l'aide d'un modèle de régression linéaire des moindres carrés, et

dans lequel le coefficient de détermination $R^2$ de la fonction exponentielle est supérieur ou égal à 0,9 ; et

la filtration d'un liquide à l'aide du milieu filtrant.

3. Milieu filtrant selon la revendication 1 ou procédé selon la revendication 2, dans lequel :

a) a est supérieur ou égal à 2 $\mu$m et inférieur ou égal à 60 $\mu$m et/ou

b) k est supérieur ou égal à 0,25 et inférieur ou égal à 0,75 et/ou

c) k est inférieur ou égal à 1,5.

4. Milieu filtrant selon la revendication 1 ou 3 ou procédé selon la revendication 2 ou 3, dans lequel le gradient dans la taille de pore moyenne est à travers toute l'épaisseur du milieu filtrant.

5. Milieu filtrant selon l'une quelconque des revendications 1 et 3 à 4 ou procédé selon l'une quelconque des revendications 2, 3 et 4, dans lequel :

a) la capacité de rétention de poussière du milieu filtrant telle que déterminée par la norme ISO EN 13-443-2 est supérieure ou égale à 5 g/m$^2$ et inférieure ou égale à 500 g/m$^2$, facultativement dans lequel la capacité de rétention de poussière est supérieure ou égale à 10 g/m$^2$ et inférieure ou égale à 300 g/m$^2$,

b) dans lequel la capacité de rétention de poussière du milieu filtrant telle que déterminée par la norme ISO 16889, ISO 4548-12 ou ISO 19438 est supérieure ou égale à 40 g/m$^2$ et inférieure ou égale à 500 g/m$^2$, facultativement

dans lequel la capacité de rétention de poussière est supérieure ou égale à 70 g/m$^2$ et inférieure ou égale à 500 g/m$^2$.

6. Milieu filtrant selon l'une quelconque des revendications 1, 3 à 5 ou procédé selon l'une quelconque des revendications 2 à 5, dans lequel un changement de la taille de pore moyenne le long du gradient dans une taille de pore moyenne est supérieur ou égal à 1 $\mu$m et inférieur ou égal à 100 $\mu$m.

7. Milieu filtrant selon l'une quelconque des revendications 1, 3 à 6 ou procédé selon l'une quelconque des revendications 2 à 6, dans lequel le milieu filtrant est un milieu filtrant multicouche.

8. Milieu filtrant selon l'une quelconque des revendications 1, 3 à 7 ou procédé selon l'une quelconque des revendications 2 à 7, dans lequel le coefficient de détermination de la fonction exponentielle est supérieur à tous les coefficients de détermination pour des fonctions linéaires fixés aux quatre valeurs numériques de la taille de pore moyenne à l'aide du modèle de régression linéaire des moindres carrés.

9. Milieu filtrant selon l'une quelconque des revendications 1, 3 à 8 ou procédé selon l'une quelconque des revendications 2 à 8, dans lequel la partie de l'épaisseur du milieu filtrant est supérieure ou égale à 20 % de l'épaisseur du gradient.

**10.** Milieu filtrant selon l'une quelconque des revendications 1, 3 à 9 ou procédé selon l'une quelconque des revendications 2 à 9, dans lequel le milieu filtrant comprend des fibres de verre et/ou le milieu filtrant comprend des fibres synthétiques.

**11.** Milieu filtrant selon l'une quelconque des revendications 1, 3 à 10 ou procédé selon l'une quelconque des revendications 2 à 10, dans lequel le milieu filtrant présente un poids de base supérieur ou égal à 0,5 g/m$^2$ et inférieur ou égal à 400 g/m$^2$.

**12.** Milieu filtrant selon l'une quelconque des revendications 1, 3 à 11 ou procédé selon l'une quelconque des revendications 2 à 11, dans lequel :

a) le milieu filtrant présente une taille de particule bêta 200 telle que déterminée par la norme ISO 16889 supérieure ou égale à 2 μm et inférieure ou égale à 60 μm et/ou
b) le milieu filtrant présente une taille de particule bêta 200 telle que déterminée par la norme ISO 19438 supérieure ou égale à 2 μm et inférieure ou égale à 40 μm et/ou
c) le milieu filtrant présente une taille de particule bêta 200 telle que déterminée par la norme ISO 4548-12 supérieure ou égale à 10 μm et inférieure ou égale à 30 μm et/ou
d) le milieu filtrant présente une taille de particule bêta 200 telle que déterminée par la norme ISO EN 13-443-2 supérieure ou égale à 0,05 μm et inférieure ou égale à 5 μm.

**13.** Milieu filtrant selon l'une quelconque des revendications 1, 3 à 12 ou procédé selon l'une quelconque des revendications 2 à 12, dans lequel le gradient dans la taille de pore moyenne est à travers quatre, ou plus, couches du milieu filtrant, facultativement dans lequel au moins quatre des quatre, ou plus, couches présentent une taille de pore moyenne constante.

**14.** Milieu filtrant selon l'une quelconque des revendications 1, 3 à 13 ou procédé selon l'une quelconque des revendications 2 à 13, dans lequel le milieu filtrant comprend en outre une couche d'efficacité présentant un diamètre de fibre moyen inférieur ou égal à 1 μm.

# FIG 1A

# FIG 1B

# FIG 2A

# FIG 2B

# FIG 3A

# FIG 3B

# FIG 3C

# FIG 4A

# FIG 4B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008103736 A1

- US 20060096263 A1

**Non-patent literature cited in the description**

- **JAIN, A.** Fundamentals of digital image processing. Prentice Hall. and Russ, 1989

- The image processing handbook. CRC Press